# EUROPEAN PATENT APPLICATION

(11) **EP 4 793 257 A1**
(43) Date of publication of application: **19.08.2026**
(21) Application number: 26166635.8
(22) Date of filing: 03.03.2023
(51) Int. Cl.: C04B 35/486, C01G 25/02, C04B 35/626, C04B 35/488

(54) **ZIRCONIA POWDER**

(30) Priority: 11.03.2022 JP 2022037691
(62) Document number(s) of the earlier application(s) in accordance with Art. 76 EPC: 23766718.3 / 4 428 111
(71) Applicant: Daiichi Kigenso Kagaku Kogyo Co., Ltd., Osaka-shi, Osaka 541-0041 (JP)
(72) Inventor: FUJITA, Keisuke, Osaka-shi, Osaka, 541-0041 (JP); TAKAI, Masayuki, Osaka-shi, Osaka, 559-0025 (JP)
(74) Representative: Cabinet Beau de Loménie

(57) **Abstract**

Disclosed herein is a zirconia powder containing stabilized zirconia containing zirconia and a stabilizer, wherein the stabilizer contains an oxide of yttrium and an oxide of M, the M is at least one selected from the group consisting of Ca, Ba, Sr, Dy, Tb, Gd, Eu, Sm, Nd, Pr, and La, a content of the stabilizer in the stabilized zirconia is 1.7 mol% or more and 2.6 mol% or less in terms of oxide, a molar ratio between the oxide of M and the oxide of yttrium [(oxide of M)/(oxide of yttrium)] is 0.05 or more and 1.5 or less.

## Description

### TECHNICAL FIELD

The present invention relates to a zirconia sintered body, a zirconia powder, and a method for producing a zirconia sintered body.

### BACKGROUND ART

Zirconia is conventionally used for various purposes by taking advantage of its characteristics such as high mechanical strength.

Patent Document 1 discloses a zirconia sintered body containing ZrO₂ as a main component and Y₂O₃ as a main stabilizer, the zirconia sintered body containing 0.1 to 3 mol% of at least one rare-earth metal element selected from among La, Pr, and Nd relative to ZrO₂ containing 1.5 to 4 mol% of Y₂O₃ and having a mixed phase of tetragonal crystal and at least one of monoclinic crystal and cubic crystal or a single phase of tetragonal crystal (see claim 1).

Patent Document 2 discloses a sintered body having a monoclinic fraction of 0.5% or more and a stabilizer content of 1.0 mol% or more and less than 2.5 mol% and containing at least one additive component selected from the group consisting of alumina, germania, and silica (see claim 1, claim 4, and claim 6).

Patent Document 3 discloses a zirconia sintered body mainly containing ZrO₂ comprising baddeleyite and containing one or two or more rare-earth metal oxides selected from the group consisting of Nd₂O₃, Sm₂O₃, Gd₂O₃, Dy₂O₃, Y₂O₃, Ho₂O₃, Er₂O₃, and Yb₂O₃ and Al₂O₃ and SiO₂, wherein a molar ratio between the rare-earth metal oxide (R₂O₃) and ZrO₂ (R₂O₃/ZrO₂) is 1/99 to 5/95, an Al₂O₃ content is 0.05 to 20 mol%, and a SiO₂ content is 0.05 to 10 mol% (see claim 1).

### PRIOR ART DOCUMENTS

### PATENT DOCUMENTS

Patent Document 1: JP-A-2000-095564
Patent Document 2: WO 2020/217942
Patent Document 3: JP-A-8-40770

### SUMMARY OF THE INVENTION

### PROBLEMS TO BE SOLVED BY THE INVENTION

An yttria-stabilized zirconia sintered body is subjected to phase transformation from a tetragonal phase to a monoclinic phase in hot water or the atmosphere (100 to 300°C) so that its mechanical characteristics are degraded. Herein, degradation in hot water is referred to as hydrothermal degradation, and degradation at high temperature (100 to 300°C) in the atmosphere is referred to as thermal degradation.

The both (hydrothermal degradation and thermal degradation) are conventionally believed to be caused by the same mechanism. However, according to studies by the present inventors, thermal degradation resistance is not always high even when hydrothermal degradation resistance is high. For example, a sintered body described herein as Comparative Example 5 has high hydrothermal degradation resistance but is poor in thermal degradation resistance.

Zirconia materials are considered to be used also in the absence of water vapor under high temperature conditions, and therefore it is important to develop a zirconia sintered body having excellent thermal degradation resistance and excellent mechanical characteristics.

Patent Document 1 describes that the zirconia sintered body disclosed in Patent Document 1 can achieve both thermal stability and mechanical characteristics (see paragraph [0043]).

In Patent Document 1, however, what has actually been confirmed is not thermal stability (thermal degradation resistance) but hydrothermal degradation resistance. Specifically, in Patent Document 1, degradation condition of a sintered body is confirmed after performing an aging test in hot water or water vapor (water vapor pressure 4 MPa) at 250°C for 50 hours (see paragraph [0053]), which is intended to confirm hydrothermal degradation resistance. Further, as a result of a verification test by the present inventors, the zirconia sintered body disclosed in Patent Document 1 was confirmed to have high hydrothermal degradation resistance but have low thermal degradation resistance.

Patent Document 2 describes that the sintered body disclosed in Patent Document 2 has a monoclinic fraction of 0.5% or more and therefore its fracture toughness and bending strength are high and that the sintered body contains at least one additive component selected from the group consisting of alumina, germania, and silica and therefore hydrothermal degradation is prevented (see paragraph [0039] and paragraph [0052]). In Patent Document 2, however, thermal degradation resistance is untested. It should be noted that as described above, thermal degradation resistance is not always excellent even when hydrothermal degradation resistance is excellent.

Patent Document 3 describes that the sintered body disclosed in Patent Document 3 has excellent thermal shock resistance and thermal stability and high mechanical characteristics that conventional zirconia sintered bodies do not have (see paragraph [0043]). However, the sintered body disclosed in Patent Document 3 cannot be regarded as having satisfactory mechanical characteristics. Specifically, sintered bodies disclosed in Examples in Patent Document 3 have a bending strength of up to as low as 49.1 kgf/mm². This is not enough when the sintered body is used as a structural material, and therefore the sintered body is required to have higher strength.

The present invention has been conceived in view of the above-described problems, and an object of the present disclosure is to provide a zirconia sintered body having excellent hydrothermal degradation resistance, thermal degradation resistance, and mechanical characteristics. The object of the present invention is to provide a zirconia powder from which the zirconia sintered body can be obtained. Still another object of the present disclosure is to provide a method for producing a zirconia sintered body by which the zirconia sintered body can be obtained.

### MEANS FOR SOLVING THE PROBLEMS

The present inventors have intensively studied zirconia sintered bodies. As a result, the present inventors have found that by adopting the following configuration, it is possible to provide a zirconia sintered body having excellent hydrothermal degradation resistance, thermal degradation resistance, and mechanical characteristics, which has led to the completion of the present invention.

Specifically, the present disclosure is directed to a zirconia sintered body containing:
stabilized zirconia containing zirconia and a stabilizer, wherein
the stabilizer contains an oxide of yttrium and an oxide of M,
the M is at least one selected from the group consisting of Ca, Ba, Sr, Dy, Tb, Gd, Eu, Sm, Nd, Pr, and La,
a content of the stabilizer in the stabilized zirconia is 1.7 mol% or more and 2.6 mol% or less in terms of oxide,
a molar ratio between the oxide of M and the oxide of yttrium [(oxide of M)/(oxide of yttrium)] is 0.05 or more and 1.5 or less, and
a crystal grain diameter is 0.20 µm or less.

According to the present disclosure, the crystal grain diameter is 0.20 µm or less. The fact that the crystal grain diameter is 0.20 µm or less means that sintering was performed at low temperature (e.g., about 1200°C to 1350°C) . The zirconia sintered body has excellent hydrothermal degradation resistance because low-temperature sintering inhibits the growth of crystal grains.

Here, thermal degradation will be described.

Thermal degradation of stabilized zirconia refers to transition from tetragonal to monoclinic phase. The thermal degradation can be prevented by increasing the free energy gap between tetragonal and monoclinic phases. That is, the tetragonal phase needs to be more stabilized. However, when the tetragonal phase is excessively stabilized, mechanical characteristics are degraded.

This will be described below.

Stabilized zirconia has a toughening mechanism, and therefore when stress is applied to stabilized zirconia, the tetragonal phase in the stabilized zirconia is transformed to the monoclinic phase, which is larger in volume than the tetragonal phase, so that the stress is cancelled out by volume expansion and the development of cracking is prevented. The stabilized zirconia has excellent mechanical characteristics by effectively exhibiting such a toughening mechanism.

However, when significantly stabilized, the tetragonal phase is less likely to be transformed to the monoclinic phase, and therefore the effect of the toughening mechanism is diminished. For this reason, simply stabilizing the tetragonal phase improves thermal degradation resistance but degrades mechanical characteristics.

The present invention is intended to solve the above problem.

First, in the present invention, both the oxide of yttrium and the oxide of M are contained as a stabilizer. The oxide of yttrium can more easily impart high mechanical characteristics as compared to oxides of other elements. In the present invention, the oxide of yttrium is contained as a stabilizer, and therefore excellent mechanical characteristics are easily achieved.

It should be noted that having excellent mechanical characteristics herein means that both of toughness and mechanical strength are excellent.

Further, in the present invention, the oxide of M is contained as a stabilizer, and a molar ratio between the oxide of M and the oxide of yttrium [(oxide of M) / (oxide of yttrium)] is 0.05 or more and 1.5 or less.

Since the oxide of M is contained in such a molar ratio, the tetragonal phase can appropriately be stabilized, which makes it possible to improve hydrothermal degradation resistance and thermal degradation resistance.

As described above, in general, when the tetragonal phase is stabilized, mechanical characteristics are degraded.

However, the present inventors have surprisingly found that when the oxide of M is contained in the above molar ratio, mechanical characteristics are less likely to degrade so that the sintered body has mechanical characteristics comparable to those of conventional zirconia sintered bodies. That is, according to the present invention, since the oxide of M is contained in the above molar ratio, excellent hydrothermal degradation resistance, thermal degradation resistance, and mechanical characteristics are achieved.

It should be noted that Examples also demonstrate that when the oxide of M is contained in the above molar ratio, excellent hydrothermal degradation resistance, thermal degradation resistance, and mechanical characteristics are achieved.

Further, in the present invention, the content of the stabilizer in the stabilized zirconia is 1.7 mol% or more and 2.6 mol% or less in terms of oxide. As described above, when the tetragonal phase is significantly stabilized, mechanical characteristics are degraded. However, in the present invention, since the content of the stabilizer is 2.6 mol% or less in terms of oxide, excellent mechanical characteristics (especially, toughness) are achieved. Further, since the content of the stabilizer is 1.7 mol% or more in terms of oxide, excellent thermal degradation resistance is achieved.

As described above, the above configuration of the present invention makes it possible to provide a zirconia sintered body having excellent hydrothermal degradation resistance, thermal degradation resistance, and mechanical characteristics. Particularly, the zirconia sintered body has excellent thermal degradation resistance and is therefore less likely to be subjected to phase transformation even when used in an environment at several hundred degrees Celsius. Therefore, the zirconia sintered body is less likely to change in its mechanical characteristics and dimensions by, for example, heat generated during processing such as grinding or polishing. Further, degradation resulting from a use environment is less likely to occur.

It should be noted that although not described in Patent Document 1, the zirconia sintered body disclosed in Patent Document 1 is estimated to have a crystal grain diameter larger than 0.20 µm because sintering is performed at a high sintering temperature. Further, in Patent Document 1, there is no description about the control of the above molar ratio [(oxide of M) / (oxide of yttrium)]. In the case of the zirconia sintered body disclosed in Patent Document 1, toughness is reduced when the amount of the rare-earth element added relative to Y₂O₃ is increased, and therefore the ratio between Y₂O₃ and the rare-earth element added needs to be controlled to exhibit high mechanical characteristics, but there is no description about such a technical idea in Patent Document 1.

In Patent Document 2, there is no description about the addition of an atom corresponding to M in the present invention.

In Examples of Patent Document 3, there is no description that both of the oxide of yttrium and the oxide of Mare contained. In addition, in Patent Document 3, there is no description and suggestion that a specific combination of the oxide of yttrium and the oxide of M is contained.

In the above configuration, the M is preferably at least one selected from the group consisting of Ca, Dy, Tb, Nd, and La.

When the M is at least one selected from the group consisting of Ca, Dy, Tb, Nd, and La, more excellent hydrothermal degradation resistance, thermal degradation resistance, and mechanical characteristics are achieved.

In the above configuration, a content of the oxide of M in the stabilized zirconia is preferably 0.1 mol% or more and 1.3 mol% or less.

When the content of the oxide of M is 0.1 mol% or more and 1.3 mol% or less, more excellent hydrothermal degradation resistance, thermal degradation resistance, and mechanical characteristics are achieved.

In the above configuration, a ratio of a tetragonal fraction after thermal treatment at 300°C for 1 hour relative to a tetragonal fraction before thermal treatment is preferably 70% or more.

When the ratio of a tetragonal fraction after thermal treatment at 300°C for 1 hour relative to a tetragonal fraction before thermal treatment is 70% or more, more excellent thermal degradation resistance is achieved.

In the above configuration, a ratio of a tetragonal fraction after hydrothermal treatment at 134°C and 3 atmospheres for 40 hours relative to a tetragonal fraction before hydrothermal treatment is preferably 70% or more. It should be noted that the term "hydrothermal treatment" herein means treatment in hot water.

When the ratio of a tetragonal fraction after hydrothermal treatment at 134°C and 3 atmospheres for 40 hours relative to a tetragonal fraction before hydrothermal treatment is 70% or more, excellent hydrothermal degradation resistance is achieved.

In the above configuration, the zirconia sintered body preferably has a toughness value of 5 MPa·m^{0.5} or more as measured by IF method.

When the toughness value as measured by IF method is 5 MPa·m^{0.5} or more, toughness can be regarded as being high. It should be noted that conventionally-known zirconia sintered bodies have a toughness value of about 5 MPa·m^{0.5}, and therefore when the above toughness value is 5 MPa·m^{0.5} or more, toughness can be regarded as being comparable to or higher than that of conventionally-known zirconia sintered bodies.

In the above configuration, the zirconia sintered body preferably has a three-point bending strength of 80 kgf/mm² or more and 150 kgf/mm² or less.

When the three-point bending strength is 80 kgf/mm² or more, mechanical strength can be regarded as being high. It should be noted that conventionally-known zirconia sintered bodies have a three-point bending strength of about 80 kgf/mm², and therefore when the above three-point bending strength is 80 kgf/mm² or more, mechanical strength can be regarded as being comparable to or higher than that of conventionally-known zirconia sintered bodies.

The present invention is directed to a zirconia powder containing
stabilized zirconia containing zirconia and a stabilizer, wherein
the stabilizer contains an oxide of yttrium and an oxide of M,
the M is at least one selected from the group consisting of Ca, Ba, Sr, Dy, Tb, Gd, Eu, Sm, Nd, Pr, and La,
a content of the stabilizer in the stabilized zirconia is 1.7 mol% or more and 2.6 mol% or less in terms of oxide, and
a molar ratio between the oxide of M and the oxide of yttrium [(oxide of M)/(oxide of yttrium)] is 0.05 or more and 1.5 or less.

The above configuration makes is possible to obtain a zirconia sintered body having excellent hydrothermal degradation resistance, thermal degradation resistance, and mechanical characteristics by low-temperature sintering (e.g., sintering at about 1200°C or higher and 1350°C or lower).

In the above configuration, the M is preferably at least one selected from the group consisting of Ca, Dy, Tb, Nd, and La.

When the M is at least one selected from the group consisting of Ca, Dy, Tb, Nd, and La, a zirconia sintered body obtained by low-temperature sintering has more excellent hydrothermal degradation resistance, thermal degradation resistance, and mechanical characteristics.

In the above configuration, a content of the oxide of M is preferably 0.1 mol% or more and 1.3 mol% or less.

When the content of the oxide of M is 0.1 mol% or more and 1.3 mol% or less, a zirconia sintered body obtained by low-temperature sintering has more excellent hydrothermal degradation resistance, thermal degradation resistance, and mechanical characteristics.

In the above configuration, the zirconia powder preferably has a specific surface area of 15 m²/g or more and 50 m²/g or less.

When the specific surface area is 15 m²/g or more, low-temperature sinterability can be improved.

In the above configuration, the zirconia powder preferably has a particle diameter D₅₀ of 0.1 µm or more and 1.0 µm or less.

When the particle diameter D₅₀ is 1.0 µm or less, the particle diameter of particles (secondary particles) is relatively small, and therefore interparticle spaces between the secondary particles can be made small. As a result, the zirconia powder has excellent low-temperature sinterability. Further, since interparticle spaces between the secondary particles are small, a sintered body having a high sintered density can be obtained.

In the above configuration, the zirconia powder preferably has the following <Characteristic 1> when molded at a molding pressure of 2 t/cm² by cold isostatic pressing and then heated at 1250°C for 2 hours.

### <Characteristic 1>

A ratio of a tetragonal fraction after thermal treatment at 300°C for 1 hour relative to a tetragonal fraction before thermal treatment is 70% or more.

When the ratio of a tetragonal fraction after thermal treatment at 300°C for 1 hour relative to a tetragonal fraction before thermal treatment is 70% or more, a zirconia sintered body obtained by low-temperature sintering of the zirconia powder has more excellent thermal degradation resistance.

In the above configuration, the zirconia powder preferably has the following <Characteristic 2> when molded at a molding pressure of 2 t/cm² by cold isostatic pressing and then heated at 1250°C for 2 hours.

### <Characteristic 2>

A ratio of a tetragonal fraction after hydrothermal treatment at 134°C and 3 atmospheres for 40 hours relative to a tetragonal fraction before hydrothermal treatment is 70% or more.

When the ratio of a tetragonal fraction after hydrothermal treatment at 134°C and 3 atmospheres for 40 hours relative to a tetragonal fraction before hydrothermal treatment is 70% or more, a zirconia sintered body obtained by low-temperature sintering of the zirconia powder has excellent hydrothermal degradation resistance.

In the above configuration, the zirconia powder preferably has the following <Characteristic 3> when molded at a molding pressure of 2 t/cm² by cold isostatic pressing and then heated at 1250°C for 2 hours.

### <Characteristic 3>

A toughness value as measured by IF method is 5 MPa·m^{0.5} or more.

When the toughness value is 5 MPa·m^{0.5} or more, a zirconia sintered body obtained by low-temperature sintering of the zirconia powder can be regarded as having high toughness.

In the above configuration, the zirconia powder preferably has the following <Characteristic 4> when molded at a molding pressure of 2 t/cm² by cold isostatic pressing and then heated at 1250°C for 2 hours.

### <Characteristic 4>

A three-point bending strength is 80 kgf/mm² or more and 150 kgf/mm² or less.

When the three-point bending strength is 80 kgf/mm² or more, a zirconia sintered body obtained by low-temperature sintering of the zirconia powder can be regarded as having high mechanical strength.

The present disclosure is also directed to a method for producing a zirconia sintered body, including
step X in which the zirconia powder is molded to obtain a molded body; and
step Y in which, after step X, the molded body is sintered under conditions of 1200°C or higher and 1350°C or lower and 1 hour or more and 5 hours or less.

The above configuration makes it possible to obtain a zirconia sintered body by sintering the zirconia powder at a low temperature of 1200°C or higher and 1350°C or lower. Therefore, the production method makes it possible to obtain a zirconia sintered body having excellent hydrothermal degradation resistance, thermal degradation resistance, and mechanical characteristics.

### EFFECTS OF THE INVENTION

According to the present invention, it is possible to provide a zirconia sintered body having excellent hydrothermal degradation resistance, thermal degradation resistance, and mechanical characteristics. Further, it is possible to provide a zirconia powder from which the zirconia sintered body can be obtained. Further, it is possible to provide a method for producing a zirconia sintered body by which the zirconia sintered body can be obtained.

### BRIEF DESCRIPTION OF THE DRAWINGS

Fig. 1 is a schematic diagram for illustrating a method for producing a zirconia powder according to an embodiment of the present invention.
Fig. 2 is a schematic diagram for illustrating indentation lengths and crack lengths.

### MODE FOR CARRYING OUT THE INVENTION

Hereinafter, embodiments of the present invention will be described. However, the present invention is not limited only to these embodiments. Zirconia (zirconium oxide) herein is common zirconia and contains 10 mass% or less of metal compounds including hafnia as impurities. The terms "comprise" and "contain" herein include the concepts of "comprise", "contain", "substantially consist of", and "consist of".

The maximum value and minimum value of content of each component shown below should each independently be considered as a preferable minimum value and a preferable maximum value of the present invention regardless of the contents of other components.

Further, the maximum values and the minimum values of various parameters (measured values and the like) shown below should each independently be considered as preferable minimum values and maximum values of the present invention regardless of the content (composition) of each component.

### [Zirconia sintered body]

Hereinbelow, an example of a zirconia sintered body according to an embodiment of the present disclosure will be described. However, the zirconia sintered body of the present invention is not limited to the following example.

The zirconia sintered body according to the present embodiment contains
stabilized zirconia containing zirconia and a stabilizer, wherein
the stabilizer contains an oxide of yttrium and an oxide of M,
the M is at least one selected from the group consisting of Ca, Ba, Sr, Dy, Tb, Gd, Eu, Sm, Nd, Pr, and La,
a content of the stabilizer in the stabilized zirconia is 1.7 mol% or more and 2.6 mol% or less in terms of oxide,
a molar ratio between the oxide of M and the oxide of yttrium [(oxide of M)/(oxide of yttrium)] is 0.05 or more and 1.5 or less, and
a crystal grain diameter is 0.20 µm or less.

### <Crystal grain diameter>

As described above, the zirconia sintered body according to the present embodiment has a crystal grain diameter of 0.20 µm or less. The fact that the crystal grain diameter is 0.20 µm or less means that sintering was performed at low temperature (e.g., about 1200°C to 1350°C). The zirconia sintered body has excellent hydrothermal degradation resistance because low-temperature sintering inhibits the growth of crystal grains.

The crystal grain diameter is preferably 0.20 µm or less, more preferably 0.18 µm or less, even more preferably 0.16 µm or less. The crystal grain diameter is preferably as small as possible and may be, for example, 0.05 µm or more.

### <Composition>

The zirconia sintered body according to the present embodiment contains stabilized zirconia.

The content of the stabilized zirconia is preferably 70 mass% or more, more preferably 75 mass% or more, even more preferably 80 mass% or more, particularly preferably 85 mass% or more when the entire amount of the zirconia sintered body is taken as 100 mass%. The content of the stabilized zirconia may be 99 mass% or less, 95 mass% or less, or the like when the entire amount of the zirconia sintered body is taken as 100 mass%. The zirconia sintered body may be composed of only the stabilized zirconia. That is, the zirconia sintered body may be formed by sintering only the stabilized zirconia. In this case, the content of the stabilized zirconia is 100 mass% when the entire amount of the zirconia sintered body is taken as 100 mass%.

The stabilized zirconia contains zirconia and a stabilizer. Since the stabilizer is contained, the zirconia sintered body can be regarded as having been obtained by low-temperature sintering. The total content of zirconia and the stabilizer in the stabilized zirconia is preferably 80 mass% or more, more preferably 90 mass% or more when the entire amount of the stabilized zirconia is taken as 100 mass%. The total content of zirconia and the stabilizer may be 99 mass% or less, 95 mass% or less, or the like when the entire amount of the stabilized zirconia is taken as 100 mass%. The stabilized zirconia may be composed of only zirconia and a stabilizer.

The stabilizer contains an oxide of yttrium and an oxide of M. The M is at least one selected from the group consisting of Ca, Ba, Sr, Dy, Tb, Gd, Eu, Sm, Nd, Pr, and La. The oxide of yttrium can more easily impart high mechanical characteristics as compared to oxides of other elements. In the present embodiment, the oxide of yttrium is contained as a stabilizer, and therefore excellent mechanical characteristics are easily achieved.

The molar ratio between the oxide of M and the oxide of yttrium [(oxide of M)/(oxide of yttrium)] is 0.05 or more and 1.5 or less.

The ionic radius ratio between Zr⁴⁺ and O²⁻ for coordination is smaller than 0.732 that is an ideal ionic radius ratio for 8-coordination derived from Pauling's first rule. Here, the M is an element having a larger ionic radius than Zr⁴⁺ and Y³⁺. The present inventors have arrived at an idea that the tetragonal phase having a Zr-O coordination number of 8 is stabilized by bringing the ionic radius ratio between O²⁻ and Zr⁴⁺ and an ion species Mⁿ⁺ that can be substituted for Zr⁴⁺ for coordination close to an ideal ionic radius ratio for 8-coordination so that the chemical free energy gap between the tetragonal phase and the monoclinic phase having a Zr-O coordination number of 7 is increased.

However, addition of the element M having a large ionic radius ratio degrades mechanical characteristics. Therefore, the present inventors have further intensively studied. As a result, the present inventors have found that the tetragonal phase can be stabilized to the extent that mechanical characteristics are not significantly degraded and hydrothermal degradation resistance and thermal degradation resistance can be improved by setting the molar ratio [(oxide of M)/(oxide of yttrium)] to 0.05 or more and 1.5 or less. For the above reason, the molar ratio [(oxide of M)/(oxide of yttrium)] is set to 0.05 or more and 1.5 or less.

As described above, in the present embodiment, since the oxide of M is contained in the above molar ratio, excellent hydrothermal degradation resistance, thermal degradation resistance, and mechanical characteristics are achieved.

The molar ratio [(oxide of M)/(oxide of yttrium)] is preferably 0.07 or more, more preferably 0.09 or more. The molar ratio [(oxide of M) / (oxide of yttrium)] is preferably 1.45 or less, more preferably 1.40 or less.

The ionic radius used herein is an effective ionic radius described in Non-Patent Document (R. D. Shannon, Acta Cryst. 1976, A32, pp. 751-767). Each ion is regarded as having a valence stable in the atmosphere. That is, Zr is regarded as a tetravalent cation, La, Nd, Tb, and Dy are regarded as trivalent cations, Ca is regarded as a divalent cation, and O is regarded as a divalent anion. As ionic radii of all ions, effective ionic radii for 8-coordination are used. For example, the ionic radius of Zr⁴⁺ is regarded as 0.84 Å, the ionic radius of Y³⁺ is regarded as 1.019 Å, the ionic radius of La³⁺ is regarded as 1.160 Å, the ionic radius of Nd³⁺ is regarded as 1.109 Å, the ionic radius of Tb³⁺ is regarded as 1.040 Å, the ionic radius of Dy³⁺ is regarded as 1.027 Å, and the ionic radius of Ca²⁺ is regarded as 1.12 Å. The ionic radius of an oxygen ion is regarded as 1.42 Å.

The M is preferably at least one selected from the group consisting of Ca, Dy, Tb, Nd, and La. When the M is at least one selected from the group consisting of Ca, Dy, Tb, Nd, and La, more excellent hydrothermal degradation resistance, thermal degradation resistance, and mechanical characteristics are achieved.

The content of the stabilizer in the stabilized zirconia is 1.7 mol% or more and 2.6 mol% or less in terms of oxide. As described above, when the tetragonal phase is significantly stabilized, mechanical characteristics are degraded. However, in the present embodiment, since the content of the stabilizer is 2.6 mol% or less in terms of oxide, excellent mechanical characteristics (especially, toughness) are achieved. Further, since the content of the stabilizer is 1.7 mol% or more in terms of oxide, excellent thermal degradation resistance is achieved.

The content of the stabilizer in the stabilized zirconia is preferably 1.72 mol% or more, more preferably 1.75 mol% or more in terms of oxide. The content of the stabilizer in the stabilized zirconia is preferably 2.58 mol% or less, more preferably 2.55 mol% or less in terms of oxide.

The content of the oxide of M in the stabilized zirconia is preferably 0.1 mol% or more and 1.3 mol% or less. When the content of the oxide of M is 0.1 mol% or more and 1.3 mol% or less, more excellent hydrothermal degradation resistance, thermal degradation resistance, and mechanical characteristics are achieved.

The content of the oxide of M is more preferably 0.12 mol% or more, even more preferably 0.15 mol% or more. The content of the oxide of M is more preferably 1.2 mol% or less, even more preferably 1.1 mol% or less.

Particularly, when Ca is used as the M, the content of the oxide of M is preferably 0.1 mol% or more, more preferably 0.12 mol% or more. When Ca is used as the M, the content of the oxide of M is more preferably 1.3 mol% or less, even more preferably 1.2 mol% or less.

When Ba is used as the M, the content of the oxide of M is preferably 0.1 mol% or more, more preferably 0.12 mol% or more. When Ba is used as the M, the content of the oxide of M is more preferably 1.3 mol% or less, even more preferably 1.2 mol% or less.

When Sr is used as the M, the content of the oxide of M is preferably 0.1 mol% or more, more preferably 0.12 mol% or more. When Sr is used as the M, the content of the oxide of M is more preferably 1.3 mol% or less, even more preferably 1.2 mol% or less.

When Dy is used as the M, the content of the oxide of M is preferably 0.1 mol% or more, more preferably 0.12 mol% or more. When Dy is used as the M, the content of the oxide of M is more preferably 1.3 mol% or less, even more preferably 1.2 mol% or less.

When Tb is used as the M, the content of the oxide of M is preferably 0.1 mol% or more, more preferably 0.12 mol% or more. When Tb is used as the M, the content of the oxide of M is more preferably 1.3 mol% or less, even more preferably 1.2 mol% or less.

When Gd is used as the M, the content of the oxide of M is preferably 0.1 mol% or more, more preferably 0.12 mol% or more. When Gd is used as the M, the content of the oxide of M is more preferably 1.3 mol% or less, even more preferably 1.2 mol% or less.

When Eu is used as the M, the content of the oxide of M is preferably 0.1 mol% or more, more preferably 0.12 mol% or more. When Eu is used as the M, the content of the oxide of M is more preferably 1.3 mol% or less, even more preferably 1.2 mol% or less.

When Sm is used as the M, the content of the oxide of M is preferably 0.1 mol% or more, more preferably 0.12 mol% or more. When Sm is used as the M, the content of the oxide of M is more preferably 1.3 mol% or less, even more preferably 1.2 mol% or less.

When Nd is used as the M, the content of the oxide of M is preferably 0.1 mol% or more, more preferably 0.12 mol% or more. When Nd is used as the M, the content of the oxide of M is more preferably 1.3 mol% or less, even more preferably 1.2 mol% or less.

When Pr is used as the M, the content of the oxide of M is preferably 0.1 mol% or more, more preferably 0.12 mol% or more. When Pr is used as the M, the content of the oxide of M is more preferably 1.3 mol% or less, even more preferably 1.2 mol% or less.

When La is used as the M, the content of the oxide of M is preferably 0.1 mol% or more, more preferably 0.12 mol% or more. When La is used as the M, the content of the oxide of M is more preferably 1.3 mol% or less, even more preferably 1.2 mol% or less.

The content of the oxide of yttrium in the stabilized zirconia is preferably 0.4 mol% or more and 2.5 mol% or less. When the content of the oxide of M is 0.4 mol% or more and 2.5 mol% or less, more excellent mechanical characteristics are easily achieved.

The content of the oxide of yttrium in the stabilized zirconia is more preferably 0.5 mol% or more, even more preferably 0.6 mol% or more. The content of the oxide of yttrium is more preferably 2.2 mol% or less, even more preferably 2 mol% or less.

The content of zirconia in the stabilized zirconia is preferably 97.4 mol% or more and 98.3 mol% or less. The content of zirconia in the stabilized zirconia is more preferably 97.42 mol% or more, even more preferably 97.5 mol% or more. The content of zirconia in the stabilized zirconia is more preferably 98.28 mol% or less, even more preferably 98.25 mol% or less.

The zirconia sintered body may contain alumina. Alternatively, the zirconia sintered body may not contain alumina.

When the zirconia sintered body contains alumina, the content of the alumina is preferably 0.005 mass% or more and 10 mass% or less relative to the entire amount of the zirconia sintered body. When the content of the alumina is 0.005 mass% or more, more excellent hydrothermal degradation resistance and thermal degradation resistance are achieved. When the content of the alumina is 10 mass% or less, low-temperature sintering can be performed without significantly reducing sinterability.

When the zirconia sintered body contains alumina, the content of the alumina is more preferably 0.01 mass% or more, even more preferably 0.02 mass% or more. When the zirconia powder contains alumina, the content of the alumina is more preferably 8 mass% or less, even more preferably 5 mass% or less.

In addition to or instead of the above, the zirconia sintered body may contain sinterable ceramics, a thermosetting resin, or the like for the purpose of improving mechanical characteristics or the like. The zirconia sintered body may contain a colorant for the purpose of, for example, improving an aesthetic merit.

### <Relative sintered density>

The relative sintered density of the zirconia sintered body is preferably 95% or more, more preferably 98% or more. When the relative sintered density is 95% or more, the zirconia sintered body can be regarded as having sufficiently been sintered. When the relative sintered density is 99% or more, the zirconia sintered body has higher strength.

### <Method for measuring relative sintered density of zirconia sintered body>

The relative sintered density refers to a relative sintered density represented by the following formula (1): 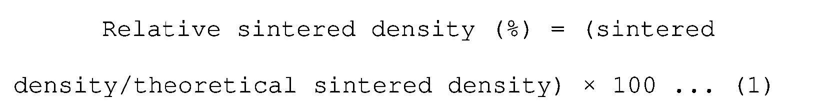 Relative sintered density (%) = (sintered density/theoretical sintered density) × 100

Here, the theoretical sintered density (denoted by pₒ) is a value calculated by the following formula (2-1): ${ρ}_{0} = 100 / \left[\left(Z/3.987\right)+\left(100-Z\right)/ρz\right]$ wherein ρz is a value calculated by the following formula (2-2) : 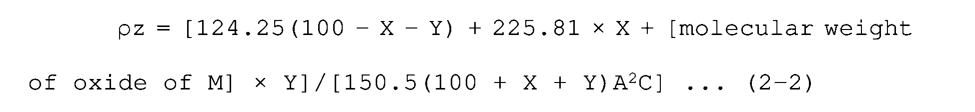 ρz = [124.25(100 - X - Y) + 225.81 × X + [molecular weight of oxide of M] × Y]/[150.5(100 + X + Y)A2C] wherein X, Y, and Z are respectively the concentration (mol%) of yttria, the concentration (mol%) of the oxide of M, and the concentration (wt%) of alumina, and A and C are respectively values calculated by the following formulae (2-3) and (2-4): $A = 0.5080 + 0.06980 \left(X+Y\right) / \left(100+X+Y\right)$ $C = 0.5195 - 0.06180 \left(X+Y\right) / \left(100+X+Y\right)$

In the formula (1), the theoretical sintered density varies depending on the composition of the powder. For example, the theoretical sintered density of yttria-containing zirconia is 6.174 g/cm³ when the yttria content is 1.5 mol% and the Nd oxide content is 0.50 mol%, 6.106 g/cm³ when the yttria content is 1.5 mol% and the Ca oxide content is 0.50 mol% (in the case of Al₂O₃ = 0 wt%).

The theoretical sintered density (denoted by ρ₁) in the case of containing a colorant is ${ρ}_{1} = 100 / \left[\left(Z/V\right)+\left(100-Z\right)/{ρ}_{0}\right]$ wherein Z is the concentration (wt%) of the colorant and V is the theoretical density (g/cm³) of the colorant.

The theoretical density of the colorant is 5.24 g/cm³ for Fe₂O₃, 5.61 g/cm³ for ZnO, 5.03 g/cm³ for MnO₂, 6.10 g/cm³ for CoO, 5.22 g/cm³ for Cr₂O₃, 4.23 g/cm³ for TiO₂, 7.80 g/cm³ for Tb₄O₇, 6.31 g/cm³ for CuO, and 3.36 g/cm³ for V₂O₅.

The sintered density is measured by Archimedes method.

### <Thermal degradation resistance>

In the zirconia sintered body, the ratio of a tetragonal fraction after thermal treatment at 300°C for 1 hour relative to a tetragonal fraction before thermal treatment (hereinafter also referred to as "ratio A") is preferably 70% or more.

The ratio A is more preferably 75% or more, even more preferably 80% or more. The ratio A is preferably as large as possible and may be, for example, 100% or less or 99% or less. The ratio A is particularly preferably 100%.

When the ratio A is 70% or more, the zirconia sintered body has more excellent thermal degradation resistance.

### <Hydrothermal degradation resistance>

In the zirconia sintered body, the ratio of a tetragonal fraction after hydrothermal treatment at 134°C and 3 atmospheres for 40 hours relative to a tetragonal fraction before hydrothermal treatment (hereinafter also referred to as "ratio B") is preferably 70% or more.

The ratio B is more preferably 75% or more, even more preferably 80% or more. The ratio B is preferably as large as possible and may be, for example, 100% or less or 99% or less. The ratio B is particularly preferably 100%.

When the ratio B is 70% or more, the zirconia sintered body has excellent hydrothermal degradation resistance.

Herein, the phase fractions of the crystal phases contained in the zirconia sintered body are calculated by the following formulae. 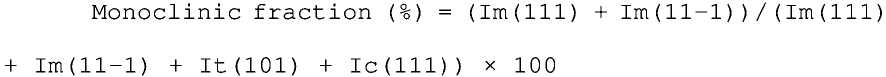 Monoclinic fraction (%) = (Im(111) + Im(11-1))/(Im(111) + Im(11-1) + It(101) + Ic(111)) × 100 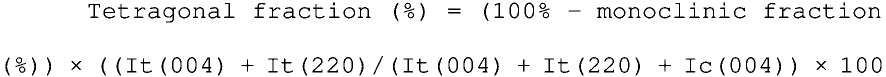 Tetragonal fraction (%) = (100% - monoclinic fraction (%)) × ((It(004) + It(220)/(It(004) + It(220) + Ic(004)) × 100 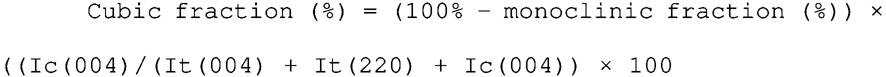 Cubic fraction (%) = (100% - monoclinic fraction (%)) × ((Ic(004)/(It(004) + It(220) + Ic(004)) × 100

Here, Im(111) is the diffraction intensity of (111) in the monoclinic phase and Im(11-1) is the diffraction intensity of (11-1) in the monoclinic phase.

It(101) is the diffraction intensity of (101) in the tetragonal phase, It (220) is the diffraction intensity of (220) in the tetragonal phase, and It(004) is the diffraction intensity of (004) in the tetragonal phase.

Ic (004) is the diffraction intensity of (004) in the cubic phase and Ic (111) is the diffraction intensity of (111) in the cubic phase.

The monoclinic phase of zirconia is discriminated from the tetragonal phase and the cubic phase in the vicinity of 2θ = 26 to 36° in the XRD spectrum. The tetragonal phase is discriminated from the cubic phase in the vicinity of 2θ = 72 to 76° in the XRD spectrum. The cubic phase may be distorted depending on the amount of the stabilizer added and the type of production method used, which may cause a peak position to shift. Herein, however, a peak between (004) and (220) in the tetragonal phase is calculated as the peak of the cubic phase.

Details of an X-ray diffractometer and XRD measurement conditions are as described in Examples.

### <Toughness>

The zirconia sintered body preferably has a toughness value of 5 MPa·m^{0.5} or more as measured by IF method.

The toughness value is more preferably 6 MPa·m^{0.5} or more, even more preferably 7 MPa·m^{0.5} or more. The toughness value is preferably as large as possible and may be, for example, 30 MPa·m^{0.5} or less or 25 MPa·m^{0.5} or less.

When the toughness value is 5 Mpa·m^{0.5} or more, the zirconia sintered body can be regarded as having high toughness.

<Mechanical strength>

The zirconia sintered body preferably has a three-point bending strength of 80 kgf/mm² or more and 150 kgf/mm² or less.

The three-point bending strength is more preferably 90 kgf/mm² or more, even more preferably 100 kgf/mm² or more. The three-point bending strength is preferably as large as possible and may be, for example, 145 kgf/mm² or less or 140 kgf/mm² or less.

When the three-point bending strength is 80 kgf/mm² or more, the zirconia sintered body can be regarded as having high mechanical strength.

The zirconia sintered body according to the present embodiment can be obtained by, for example, sintering a zirconia powder that will be described later. A method for producing the zirconia sintered body will be described later.

The zirconia sintered body according to the present embodiment has been described above.

### [Zirconia powder]

A zirconia powder according to an embodiment of the present invention contains
stabilized zirconia containing zirconia and a stabilizer, wherein
the stabilizer contains an oxide of yttrium and an oxide of M,
the M is at least one selected from the group consisting of Ca, Ba, Sr, Dy, Tb, Gd, Eu, Sm, Nd, Pr, and La,
a content of the stabilizer in the stabilized zirconia is 1.7 mol% or more and 2.6 mol% or less in terms of oxide, and
a molar ratio between the oxide of M and the oxide of yttrium [(oxide of M)/(oxide of yttrium)] is 0.05 or more and 1.5 or less.

The zirconia powder contains primary particles that are not aggregated and secondary particles in which primary particles are aggregated.

It should be noted that, in the zirconia powder, the amount of primary particles that do not form secondary particles and are present in the state of unaggregated primary particles is very small and is, for example, less than 1 mass% of the entire primary particles (i.e., the total of unaggregated primary particles and primary particles aggregated and forming secondary particles). That is, the zirconia powder may contain a very small amount of unaggregated primary particles, but most of the zirconia powder is composed of secondary particles.

### <Composition>

The zirconia powder according to the present embodiment contains stabilized zirconia.

The content of the stabilized zirconia is preferably 70 mass% or more, more preferably 75 mass% or more, even more preferably 80 mass% or more, particularly preferably 85 mass% or more when the entire amount of the zirconia powder is taken as 100 mass%. The content of the stabilized zirconia may be 99 mass% or less, 95 mass% or less, or the like when the entire amount of the zirconia powder is taken as 100 mass%. The zirconia powder may be composed of only the stabilized zirconia. In this case, the content of the stabilized zirconia is 100 mass% when the entire amount of the zirconia powder is taken as 100 mass%.

The stabilized zirconia contains zirconia and a stabilizer. The stabilizer is contained in the primary particles in the form of solid solution or the like. Since the stabilizer is contained, the zirconia powder can appropriately be sintered at low temperature. The total content of zirconia and the stabilizer in the stabilized zirconia is preferably 80 mass% or more, more preferably 85 mass% or more when the entire amount of the stabilized zirconia is taken as 100 mass%. The total content of zirconia and the stabilizer may be 99 mass% or less, 95 mass% or less, or the like when the entire amount of the stabilized zirconia is taken as 100 mass%. The stabilized zirconia may be composed of only zirconia and a stabilizer.

The stabilizer contains an oxide of yttrium and an oxide of M. The M is at least one selected from the group consisting of Ca, Ba, Sr, Dy, Tb, Gd, Eu, Sm, Nd, Pr, and La. The oxide of yttrium can more easily impart high mechanical characteristics as compared to oxides of other elements. In the present embodiment, the oxide of yttrium is contained as a stabilizer, and therefore excellent mechanical characteristics are easily achieved.

The molar ratio between the oxide of M and the oxide of yttrium [(oxide of M)/(oxide of yttrium)] is 0.05 or more and 1.5 or less.

The ionic radius ratio between Zr⁴⁺ and O²⁻ for coordination is smaller than 0.732 that is an ideal ionic radius ratio for 8-coordination derived from Pauling's first rule. Here, the M is an element having a larger ionic radius than Zr⁴⁺ and Y³⁺. The present inventors have arrived at an idea that the tetragonal phase having a Zr-O coordination number of 8 is stabilized by bringing the ionic radius ratio between O²⁻ and Zr⁴⁺ and an ion species Mⁿ⁺ that can be substituted for Zr⁴⁺ for coordination close to an ideal ionic radius ratio for 8-coordination so that the chemical free energy gap between the tetragonal phase and the monoclinic phase having a Zr-O coordination number of 7 is increased.

However, addition of the element M having a large ionic radius ratio degrades mechanical characteristics. Therefore, the present inventors have further intensively studied. As a result, the present inventors have found that the tetragonal phase can be stabilized to the extent that mechanical characteristics are not significantly degraded and hydrothermal degradation resistance and thermal degradation resistance can be improved by setting the molar ratio [(oxide of M)/(oxide of yttrium)] to 0.05 or more and 1.5 or less. For the above reason, the molar ratio [(oxide of M)/(oxide of yttrium)] is set to 0.05 or more and 1.5 or less.

As described above, in the present embodiment, since the oxide of M is contained in the above molar ratio, a zirconia sintered body obtained by sintering the zirconia powder has excellent hydrothermal degradation resistance, thermal degradation resistance, and mechanical characteristics.

The molar ratio [(oxide of M)/(oxide of yttrium)] is preferably 0.07 or more, more preferably 0.09 or more. The molar ratio [(oxide of M) / (oxide of yttrium)] is preferably 1.45 or less, more preferably 1.40 or less.

The ionic radius used herein is an effective ionic radius described in Non-Patent Document (R. D. Shannon, Acta Cryst. 1976, A32, pp. 751-767). Each ion is regarded as having a valence stable in the atmosphere. That is, Zr is regarded as a tetravalent cation, La, Nd, Tb, and Dy are regarded as trivalent cations, Ca is regarded as a divalent cation, and O is regarded as a divalent anion. As ionic radii of all ions, effective ionic radii for 8-coordination are used. For example, the ionic radius of Zr⁴⁺ is regarded as 0.84 Å, the ionic radius of Y³⁺ is regarded as 1.019 Å, the ionic radius of La³⁺ is regarded as 1.160 Å, the ionic radius of Nd³⁺ is regarded as 1.109 Å, the ionic radius of Tb³⁺ is regarded as 1.040 Å, the ionic radius of Dy³⁺ is regarded as 1.027 Å, and the ionic radius of Ca²⁺ is regarded as 1.12 Å. The ionic radius of an oxygen ion is regarded as 1.42 Å.

The M is preferably at least one selected from the group consisting of Ca, Dy, Tb, Nd, and La. When the M is at least one selected from the group consisting of Ca, Dy, Tb, Nd, and La, a zirconia sintered body obtained by sintering the zirconia powder at low temperature has more excellent hydrothermal degradation resistance, thermal degradation resistance, and mechanical characteristics.

The content of the stabilizer in the stabilized zirconia is 1.7 mol% or more and 2.6 mol% or less in terms of oxide. As described above, when the tetragonal phase is significantly stabilized, mechanical characteristics are degraded. However, in the present embodiment, since the content of the stabilizer is 2.6 mol% or less in terms of oxide, excellent mechanical characteristics (especially, toughness) are achieved. Further, since the content of the stabilizer is 1.7 mol% or more in terms of oxide, a zirconia sintered body obtained by sintering the zirconia powder at low temperature has excellent thermal degradation resistance.

The content of the stabilizer in the stabilized zirconia is preferably 1.72 mol% or more, more preferably 1.75 mol% or more in terms of oxide. The content of the stabilizer in the stabilized zirconia is preferably 2.58 mol% or less, more preferably 2.5 mol% or less in terms of oxide.

The content of the oxide of M in the stabilized zirconia is preferably 0.1 mol% or more and 1.3 mol% or less. When the content of the oxide of M is 0.1 mol% or more and 1.3 mol% or less, a zirconia sintered body obtained by sintering the zirconia powder at low temperature has more excellent hydrothermal degradation resistance, thermal degradation resistance, and mechanical characteristics.

The content of the oxide of M is more preferably 0.12 mol% or more, even more preferably 0.15 mol% or more. The content of the oxide of M is more preferably 1.2 mol% or less, even more preferably 1.1 mol% or less.

Particularly, when Ca is used as the M, the content of the oxide of M is preferably 0.1 mol% or more, more preferably 0.12 mol% or more. When Ca is used as the M, the content of the oxide of M is more preferably 1.3 mol% or less, even more preferably 1.2 mol% or less.

When Ba is used as the M, the content of the oxide of M is preferably 0.1 mol% or more, more preferably 0.12 mol% or more. When Ba is used as the M, the content of the oxide of M is more preferably 1.3 mol% or less, even more preferably 1.2 mol% or less.

When Sr is used as the M, the content of the oxide of M is preferably 0.1 mol% or more, more preferably 0.12 mol% or more. When Sr is used as the M, the content of the oxide of M is more preferably 1.3 mol% or less, even more preferably 1.2 mol% or less.

When Dy is used as the M, the content of the oxide of M is preferably 0.1 mol% or more, more preferably 0.12 mol% or more. When Dy is used as the M, the content of the oxide of M is more preferably 1.3 mol% or less, even more preferably 1.2 mol% or less.

When Tb is used as the M, the content of the oxide of M is preferably 0.1 mol% or more, more preferably 0.12 mol% or more. When Tb is used as the M, the content of the oxide of M is more preferably 1.3 mol% or less, even more preferably 1.2 mol% or less.

When Gd is used as the M, the content of the oxide of M is preferably 0.1 mol% or more, more preferably 0.12 mol% or more. When Gd is used as the M, the content of the oxide of M is more preferably 1.3 mol% or less, even more preferably 1.2 mol% or less.

When Eu is used as the M, the content of the oxide of M is preferably 0.1 mol% or more, more preferably 0.12 mol% or more. When Eu is used as the M, the content of the oxide of M is more preferably 1.3 mol% or less, even more preferably 1.2 mol% or less.

When Sm is used as the M, the content of the oxide of M is preferably 0.1 mol% or more, more preferably 0.12 mol% or more. When Sm is used as the M, the content of the oxide of M is more preferably 1.3 mol% or less, even more preferably 1.2 mol% or less.

When Nd is used as the M, the content of the oxide of M is preferably 0.1 mol% or more, more preferably 0.12 mol% or more. When Nd is used as the M, the content of the oxide of M is more preferably 1.3 mol% or less, even more preferably 1.2 mol% or less.

When Pr is used as the M, the content of the oxide of M is preferably 0.1 mol% or more, more preferably 0.12 mol% or more. When Pr is used as the M, the content of the oxide of M is more preferably 1.3 mol% or less, even more preferably 1.2 mol% or less.

When La is used as the M, the content of the oxide of M is preferably 0.1 mol% or more, more preferably 0.12 mol% or more. When La is used as the M, the content of the oxide of M is more preferably 1.3 mol% or less, even more preferably 1.2 mol% or less.

The content of the oxide of yttrium in the stabilized zirconia is preferably 0.4 mol% or more and 2.5 mol% or less. When the content of the oxide of M is 0.4 mol% or more and 2.5 mol% or less, a zirconia sintered body obtained by sintering the zirconia powder at low temperature is likely to have more excellent mechanical characteristics.

The content of the oxide of yttrium in the stabilized zirconia is more preferably 0.5 mol% or more, even more preferably 0.6 mol% or more. The content of the oxide of yttrium is more preferably 2.2 mol% or less, even more preferably 2 mol% or less.

The content of zirconia in the stabilized zirconia is preferably 97.4 mol% or more and 98.3 mol% or less. The content of zirconia in the stabilized zirconia is more preferably 97.42 mol% or more, even more preferably 97.5 mol% or more. The content of zirconia in the stabilized zirconia is more preferably 98.28 mol% or less, even more preferably 98.25 mol% or less.

The zirconia powder may contain alumina. Alternatively, the zirconia powder may not contain alumina.

When the zirconia powder contains alumina, the content of the alumina is preferably 0.005 mass% or more and 10 mass% or less relative to the entire amount of the zirconia powder. When the content of the alumina is 0.005 mass% or more, a zirconia sintered body obtained by sintering the zirconia powder at low temperature has more excellent hydrothermal degradation resistance and thermal degradation resistance. When the content of the alumina is 10 mass% or less, low-temperature sintering can be performed without significantly reducing sinterability.

When the zirconia powder contains alumina, the content of the alumina is more preferably 0.01 mass% or more, even more preferably 0.02 mass% or more. When the zirconia powder contains alumina, the content of the alumina is more preferably 8 mass% or less, even more preferably 5 mass% or less.

The form of alumina is not limited, but an alumina powder is preferred from the viewpoint of handleability during preparation of the zirconia powder (during mixing and dispersing alumina with and in the zirconia powder) and the viewpoint of reducing residual impurities.

When the form of alumina is a powder, the average particle diameter of primary particles of alumina is not limited and is, for example, 0.02 to 0.4 µm, preferably 0.05 to 0.3 µm, more preferably 0.07 to 0.2 µm.

In addition to or instead of the above, the zirconia powder may contain sinterable ceramics, a thermosetting resin, or the like for the purpose of improving mechanical characteristics or the like. The zirconia powder may contain a colorant for the purpose of, for example, improving an aesthetic merit.

### <Specific surface area>

The zirconia powder preferably has a specific surface area of 15 m²/g or more and 50 m²/g or less. When the specific surface area is 15 m²/g or more, low-temperature sinterability can be improved. The specific surface area refers to a value obtained by the method described in Examples.

The specific surface area is more preferably 20 m²/g or more, even more preferably 25 m²/g or more. The specific surface area is preferably as large as possible and may be, for example, 45 m²/g or less or 40 m²/g or less.

### <Particle diameter D₅₀>

The zirconia powder preferably has a particle diameter D₅₀ of 0.1 µm or more and 1.0 µm or less. The particle diameter D₅₀ is preferably 0.2 µm or more, more preferably 0.3 µm or more. The particle diameter D₅₀ is preferably 0.8 µm or less, more preferably 0.7 µm or less. The particle diameter D₅₀ refers to a value obtained by the method described in Examples.

It should be noted that when the particle diameter D₅₀ is measured, not only secondary particles but also unaggregated primary particles may be contained, but the amount of unaggregated primary particles that may be contained in the zirconia powder is very small. Therefore, the particle diameter D₅₀ may be regarded as representing the particle diameter D₅₀ of the secondary particles, that is, the average particle diameter of the secondary particles.

Since the particle diameter D₅₀ of the zirconia powder is 0.7 µm or less and the particle diameter of the secondary particles is relatively small, interparticle spaces between the secondary particles can be made small. As a result, the zirconia powder has excellent low-temperature sinterability. Further, since interparticle spaces between the secondary particles are small, a sintered body having a high sintered density can be obtained.

### <Thermal degradation resistance>

The zirconia powder preferably has the following <Characteristic 1> when molded at a molding pressure of 2 t/cm² by cold isostatic pressing and then heated at 1250°C for 2 hours.

### <Characteristic 1>

A ratio of a tetragonal fraction after thermal treatment at 300°C for 1 hour relative to a tetragonal fraction before thermal treatment (hereinafter also referred to as "ratio A") is 70% or more.

The ratio A is more preferably 75% or more, even more preferably 80% or more. The ratio A is preferably as large as possible and may be, for example, 100% or less or 99% or less. The ratio A is particularly preferably 100%.

When the ratio A is 70% or more, a zirconia sintered body obtained by sintering the zirconia powder at low temperature has more excellent thermal degradation resistance.

### <Hydrothermal degradation resistance>

The zirconia powder preferably has the following <Characteristic 2> when molded at a molding pressure of 2 t/cm² by cold isostatic pressing and then heated at 1250°C for 2 hours.

### <Characteristic 2>

A ratio of a tetragonal fraction after hydrothermal treatment at 134°C and 3 atmospheres for 40 hours relative to a tetragonal fraction before hydrothermal treatment (hereinafter also referred to as "ratio B") is 70% or more.

The ratio B is more preferably 75% or more, even more preferably 80% or more. The ratio B is preferably as large as possible and may be, for example, 100% or less or 99% or less. The ratio B is particularly preferably 100%.

When the ratio B is 70% or more, a zirconia sintered body obtained by sintering the zirconia powder at low temperature has excellent hydrothermal degradation resistance.

### <Toughness>

The zirconia powder preferably has the following <Characteristic 3> when molded at a molding pressure of 2 t/cm² by cold isostatic pressing and then heated at 1250°C for 2 hours.

### <Characteristic 3>

A toughness value as measured by IF method is 5 MPa·m^{0.5} or more.

The toughness value is more preferably 6 MPa·m^{0.5} or more, even more preferably 7 MPa·m^{0.5} or more. The toughness value is preferably as large as possible and may be for example, 30 MPa·m^{0.5} or less or 25 MPa·m^{0.5} or less.

When the toughness value is 5 MPa·m^{0.5} or more, a zirconia sintered body obtained by sintering the zirconia powder at low temperature can be regarded as having high toughness.

### <Mechanical strength>

The zirconia powder preferably has the following <Characteristic 4> when molded at a molding pressure of 2 t/cm² by cold isostatic pressing and then heated at 1250°C for 2 hours.

### <Characteristic 4>

A three-point bending strength is 80 kgf/mm² or more and 150 kgf/mm² or less.

The three-point bending strength is more preferably 90 kgf/mm² or more, even more preferably 100 kgf/mm² or more. The three-point bending strength is preferably as large as possible and may be, for example, 145 kgf/mm² or less or 140 kgf/mm² or less.

When the three-point bending strength is 80 kgf/mm² or more, a zirconia sintered body obtained by sintering the zirconia powder at low temperature can be regarded as having high mechanical strength.

The zirconia powder according to the present embodiment has been described above.

### [Method for producing zirconia powder]

Hereinafter, an example of a method for producing a zirconia powder will be described. However, the method for producing a zirconia powder is not limited to the following example.

A method for producing a zirconia powder according to an embodiment of the present disclosure includes:
step 1 in which a zirconium salt solution and a sulfating agent solution are separately heated to 95°C or higher and 100°C or lower;
step 2 in which the heated zirconium salt solution and the heated sulfating agent solution are brought into contact with each other in such a manner that a concentration of a mixed liquid does not change from start to end of the contact, thereby obtaining a basic zirconium sulfate-containing reaction liquid as a mixed liquid;
step 3 in which the basic zirconium sulfate-containing reaction liquid obtained in step 2 is aged at 95°C or higher for 3 hours or more;
step 4 in which a stabilizer is added to the aged basic zirconium sulfate-containing reaction liquid obtained in step 3;
step 5 in which a zirconium-containing hydroxide is obtained by adding an alkali to the basic zirconium sulfate-containing reaction liquid obtained in step 4; and
step 6 in which the zirconium-containing hydroxide obtained in step 5 is subjected to thermal treatment to obtain a zirconia powder, wherein
in step 2, from start to end of the contact, a weight ratio SO₄²⁻/ZrO₂ in the mixed liquid is maintained in a range of 0.3 to 0.8, and a temperature of the mixed liquid is maintained at 95°C or higher.

Hereinbelow each of the steps will be described in detail.

### <Step 1>

In step 1, a zirconium salt solution and a sulfating agent solution as starting materials are separately heated to 95°C or higher and 100°C or lower.

A zirconium salt to be used for preparing the zirconium salt solution may be anyone that supplies zirconium ions, and, for example, zirconium oxynitrate, zirconium oxychloride, zirconium nitrate, and the like can be used. These may be used singly or in combination of two or more of them. Among these, zirconium oxychloride is preferred in terms of its high productivity on an industrial scale.

A solvent to be used for preparing the zirconium salt solution may be selected according to the type of zirconium salt used etc. Usually, water (pure water or ion-exchanged water, the same applies hereinafter) is preferred.

The concentration of the zirconium salt solution is not limited, and in general, the amount of the zirconium salt contained per 1000 g of the solvent is preferably 5 to 250 g, more preferably 20 to 150 g in terms of zirconium oxide (ZrO₂).

A sulfating agent may be anyone that reacts with zirconium ions to produce a sulfate (i.e., a sulfating reagent), and examples thereof include sodium sulfate, potassium sulfate, ammonium sulfate, potassium hydrogen sulfate, sodium hydrogen sulfate, potassium disulfate, sodium disulfate, and sulfur trioxide. The sulfating agent may be in any form such as a powder or a solution, but a solution (especially, an aqueous solution) is preferred. As a solvent, the same solvent as used for preparing the zirconium salt solution can be used.

The acid concentration of the zirconium salt solution is preferably set to 0.1 to 2.0 N. By setting the acid concentration to fall within the above range, the aggregation state of particles constituting the zirconia powder can be controlled to be appropriate. The acid concentration can be adjusted by using, for example, hydrochloric acid, nitric acid, sodium hydroxide, or the like.

The concentration of the sulfating agent (the sulfating agent solution) is not limited, and in general, the amount of the sulfating agent is preferably 5 to 250 g, particularly preferably 20 to 150 g per 1000 g of the solvent.

Containers for preparing the zirconium salt solution and the sulfating agent solution are not limited in their materials as long as the containers each have a capacity large enough for sufficiently stirring the zirconium salt solution or the sulfating agent solution. However, the containers preferably have equipment capable of appropriately performing heating so that the temperature of each of the solutions does not fall below 95°C.

The heating temperature of the zirconium salt solution and the sulfating agent solution is not limited as long as it is 95°C or higher and 100°C or lower, and is preferably 97°C or higher. If step 2 is performed while the temperature of the zirconium salt solution and the sulfating agent solution is kept lower than 95°C, the zirconium salt solution and the sulfating agent do not sufficiently react with each other, resulting in a lowered yield.

### <Step 2>

In step 2, the heated zirconium salt solution and the heated sulfating agent solution are brought into contact with each other in such a manner that a concentration of a mixed liquid does not change from start to end of the contact, thereby obtaining a basic zirconium sulfate-containing reaction liquid as a mixed liquid. Here, from start to end of the contact, a weight ratio SO₄²⁻/ZrO₂ in the mixed liquid is maintained in a range of 0.3 to 0.8, and a temperature of the mixed liquid is maintained at 95°C or higher.

Hereinafter, step 2 will be described with reference to the drawings.

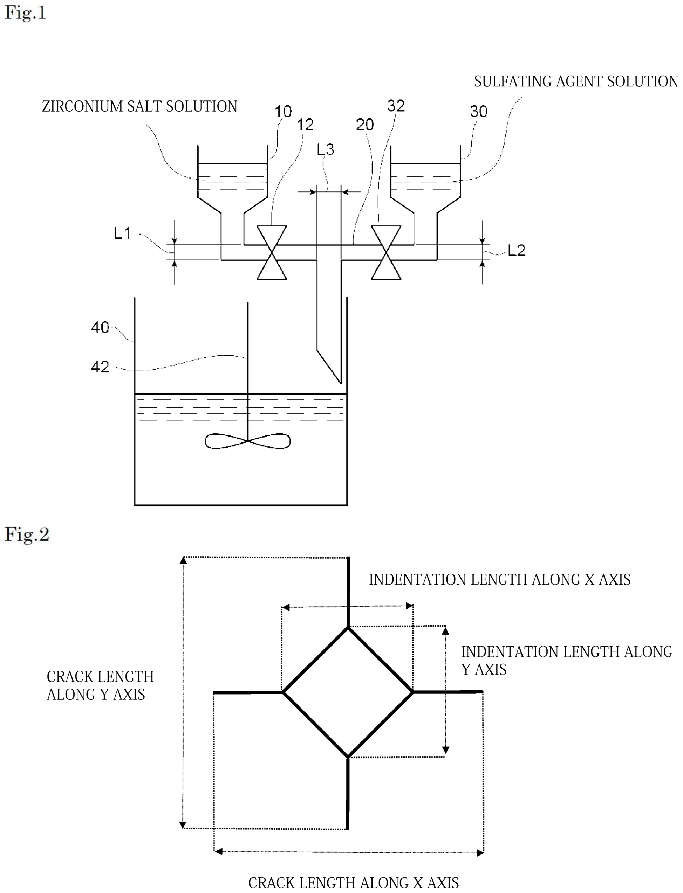

Fig. 1 is a schematic diagram for illustrating the method for producing a zirconia powder according to the present embodiment. As shown in Fig. 1, a container 10 is connected to one upper end (on the left side in Fig. 1) of a T-shaped tube 20 via a valve 12. A container 30 is connected to the other upper end (on the right side in Fig. 1) of the T-shaped tube 20 via a valve 32. In the container 10, a zirconium solution heated to 95°C or higher and 100°C or lower is stored. In the container 30, a sulfating agent solution heated to 95°C or higher and 100°C or lower is stored.

In step 2, the valve 12 is opened while the valve 32 is opened, thereby bringing the zirconium solution into contact with the sulfating agent solution. A mixed liquid (basic zirconium sulfate-containing reaction liquid) obtained by the contact immediately flows into an aging container 40 from the lower side of the T-shaped tube 20. In step 2, by such a method, the concentration of the reaction liquid (the concentration of the reaction liquid in the T-shaped tube 20) is prevented from changing from start to end of the contact of the zirconium solution with the sulfating agent solution. In step 2, since the concentration change of SO₄²⁻/ZrO₂ from start to end of the contact is prevented, a uniform reactant is obtained. By adopting such a step (step 2), the specific surface area and the particle diameter D₅₀ can be controlled.

The weight ratio SO₄²⁻/ZrO₂ in the mixed liquid in step 2 is preferably within a range of 0.3 to 0.8, more preferably 0.4 to 0.7, even more preferably 0.45 to 0.65. When the weight ratio SO₄²⁻/ZrO₂ in the mixed liquid is adjusted to 0.3 or more, the yield of basic zirconium sulfate as a reaction product can be increased. Further, when the weight ratio SO₄²⁻/ZrO₂ in the mixed liquid is adjusted to 0.8 or less, production of a soluble salt of zirconium sulfate can be prevented, thereby preventing a reduction in the yield of basic zirconium sulfate.

In step 2, in order to maintain the temperature of the mixed liquid at 95°C or higher, it is preferable to install a heater in a tube (e.g., the T-shaped tube 20) or the like for supplying each of the solutions.

Hereinbelow, an example of step 2 will specifically be described.

When 213 g of a 25 mass% aqueous sodium sulfate solution and 450 g of an aqueous zirconium oxychloride solution with a concentration of 16 mass% in terms of ZrO₂ are brought into contact with each other using, as the T-shaped tube 20, a T-shaped tube having a tube diameter L1 of 10 mm at one upper end (on the left side in Fig. 1), a tube diameter L2 of 10 mm at the other upper end (on the right side in Fig. 1), and a tube diameter L3 of 15 mm at a lower end, the time (contact time) from the start of contact to the end of contact (until the aqueous zirconium chloride solution in the container 10 and the sulfating agent solution in the container 30 disappear) is preferably 30 seconds to 300 seconds, more preferably 60 seconds to 200 seconds, even more preferably 90 seconds to 150 seconds.

### <Step 3>

In step 3, the basic zirconium sulfate-containing reaction liquid obtained in step 2 is aged at 95°C or higher for 3 hours or more. In step 3, for example, the basic zirconium sulfate-containing reaction liquid flowing into the aging container 40 is aged at 95°C or higher for 3 hours or more while being stirred with a stirrer 42. The upper limit of the aging time is not limited, and is, for example, 7 hours or less. The temperature (aging temperature) of the mixed liquid (the basic zirconium sulfate-containing reaction liquid) in step 3 is preferably 95°C or higher, more preferably 97°C or higher and 100°C or lower. By setting the aging temperature to 95°C or higher and the aging time to 3 hours or more, basic zirconium sulfate can sufficiently be produced, thereby increasing the yield.

The mixed liquid contains basic zirconium sulfate as a main component and is a basic zirconium sulfate slurry.

### <Step 4>

In step 4, a stabilizer is added to the aged basic zirconium sulfate-containing reaction liquid obtained in step 3.

### <Step 5>

In step 5, an alkali is added to the basic zirconium sulfate-containing reaction liquid obtained in step 4 to perform a neutralization reaction. Neutralization produces a zirconium-containing hydroxide.

The alkali is not limited, and examples thereof include sodium hydroxide, sodium carbonate, ammonia, hydrazine, and ammonium hydrogen carbonate. The alkali is not limited in concentration, and one diluted with water and having a concentration of 5 to 30% is usually used.

As a method for adding the alkali, there are two methods: (1) adding an alkali solution to the basic zirconium sulfate-containing reaction liquid and (2) adding the basic zirconium sulfate-containing reaction liquid to an alkali solution, but the method is not limited and either of the methods may be used.

After the neutralization, the slurry is filtered to obtain a zirconium-containing hydroxide. If necessary, the zirconium-containing hydroxide is preferably washed with water such as pure water to remove impurities. If necessary, drying or the like may be performed after washing with water.

### <Step 6>

In step 6, the zirconium-containing hydroxide obtained in step 5 is subjected to thermal treatment (firing) to oxidize the zirconium-containing hydroxide, thereby obtaining a zirconia powder.

The thermal treatment temperature (firing temperature) and the thermal treatment time (firing time) of the zirconium-containing hydroxide are not limited, but the thermal treatment is usually performed at about 600 to 1050°C for 1 hour to 10 hours. The firing temperature is more preferably 650°C or higher and 1000°C or lower, even more preferably 700°C or higher and 980°C or lower. The firing temperature is more preferably 2 hours to 6 hours, even more preferably 2 hours to 4 hours. By setting the thermal treatment temperature to 600°C or higher and 1000°C or lower, the specific surface area of the resulting zirconia powder can be set to fall within an appropriate range (15 m²/g or more and 40 m²/g or less). The thermal treatment atmosphere is not limited and may usually be air or an oxidizing atmosphere.

### <Step 7>

After step 6, if necessary, the obtained zirconia powder may be pulverized to form a slurry. In this case, a binder may be added in order to improve moldability. When a slurry is not formed (when the zirconia powder is not pulverized), the binder and the zirconia powder may uniformly be mixed with a kneading machine.

The binder is preferably an organic binder. The organic binder is likely to be removed from a molded body in a heating furnace filled with an oxidizing atmosphere so that a degreased body can be obtained, and therefore impurities are less likely to finally remain in a sintered body.

Examples of the organic binder include those that are soluble in alcohol or those that are soluble in mixed liquids of two or more selected from the group consisting of alcohols, water, aliphatic ketones, and aromatic hydrocarbons. The organic binder may be, for example, at least one selected from the group consisting of polyethylene glycol, glycol fatty acid ester, glycerin fatty acid ester, polyvinyl butyral, polyvinyl methyl ether, polyvinyl ethyl ether, and vinyl propionate. The organic binder may further contain at least one thermoplastic resin insoluble in alcohol or the mixed liquids.

After the addition of the organic binder, a target zirconia powder can be obtained by performing treatment such as drying or pulverization by a publicly-known method.

The particle diameter D₅₀ of the zirconia powder can be controlled by the pulverization in step 7. For example, pulverization is performed according to the state of the zirconia powder obtained in step 5, and the particle diameter D₅₀ of the zirconia powder can thereby be controlled to fall within a range of 0.1 µm or more and 0.7 µm or less.

When an additive such as alumina is added, a zirconia powder containing the additive can be obtained by adding the additive and mixing the resultant after step 6. As a more detailed method of the mixing, it is preferable to disperse the mixture in pure water or the like to form a slurry, followed by wet-mixing.

When step 7 is performed, the additive may be added in step 7.

The zirconia powder according to the present embodiment has been described above.

### [Method for producing zirconia sintered body]

Hereinbelow, an example of a method for producing a zirconia sintered body will be described. However, the method for producing a zirconia sintered body of the present invention is not limited to the following example.

A method for producing a zirconia sintered body according to an embodiment of the present invention includes:
step X in which the zirconia powder is molded to obtain a molded body; and
step Y in which, after step X, the molded body is sintered under conditions of 1200°C or higher and 1350°C or lower and 1 hour or more and 5 hours or less.

In the method for producing a zirconia sintered body according to the present embodiment, first, a zirconia powder is prepared. As the zirconia powder, one described in the section of [Zirconia powder] can be used.

Next, the zirconia powder is molded to obtain a molded body (step X). For the molding, a commercially available molding machine and cold isostatic pressing (CIP) can be employed. Alternatively, the zirconia powder may temporarily be molded by a molding machine once and then finally be molded by press molding. The press molding may usually be performed at a pressure in a range of 0.1 t to 3 t/cm². The pressure is preferably 0.5 t to 2.5 t/cm², more preferably 0.8 t to 2.2 t/cm², even more preferably 1 t to 2 t/cm².

Then, the molded body is sintered under conditions of 1200°C or higher and 1350°C or lower and 1 hour or more and 5 hours or less (step Y).

In the present embodiment, since the zirconia powder described above is used, the sintering temperature can be set to a low temperature of 1200°C or higher and 1350°C or lower. The sintering temperature is more preferably 1200°C or higher and 1300°C or lower, and 1200°C or higher and 1250°C or lower. The holding time during sintering is not limited, either, and is, for example, preferably about 1 to 5 hours, more preferably 1 hour to 3 hours. The sintering atmosphere may be air or an oxidizing atmosphere. The sintering may be performed under ordinary pressure, and it is not necessary to apply pressure.

The method for producing a stabilized zirconia sintered body according to the present embodiment has been described above.

The zirconia sintered body according to the present embodiment can be used as an industrial part, an aesthetic part, or a dental material. More specifically, the zirconia sintered body can be used for jewelry, watch parts, watch faces, artificial teeth, members for molding processing, wear resistant members, chemical resistant members, etc.

### EXAMPLES

Hereinafter, the present invention will be described in detail with reference to Examples, but the present invention is not limited to the following Examples, and other examples are possible as long as they do not depart from the gist of the present invention. The zirconia powder and the zirconia sintered body in each of Examples and Comparative Examples contain hafnium oxide as an unavoidable impurity in an amount of 1.3 to 2.5 mass% (calculated by the following Formula (X)) relative to zirconium oxide.

### <Formula (X)>

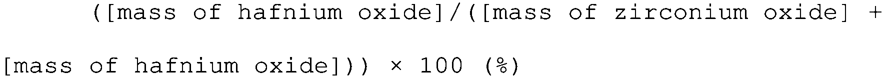

([mass of hafnium oxide]/([mass of zirconium oxide] + [mass of hafnium oxide])) × 100 (%)

The maximum value and minimum value of the content of each component shown in the following Examples should be considered as a preferable minimum value and a preferable maximum value of the present invention regardless of the contents of other components.

Further, the maximum values and the minimum values of measured values shown in the following Examples should be considered as preferable minimum values and maximum values of the present invention regardless of the content (composition) of each component.

### [Preparation of zirconia powder]

### (Example 1)

First, 213 g of a 25 mass% aqueous sodium sulfate solution and 450 g of an aqueous zirconium oxychloride solution with a concentration of 16 mass% in terms of ZrO₂ (acid concentration: 1 N) were separately heated to 95°C (step 1). Then, the heated aqueous solutions were brought into contact with each other over 2 minutes so that the mass ratio SO₄²⁻/ZrO₂ in the mixed liquid was 0.50 (step 2).

Then, the obtained basic zirconium sulfate-containing reaction liquid was aged by maintaining it at 95°C for 4 hours to obtain basic zirconium sulfate (step 3).

Then, the aged solution was cooled to room temperature, and then an aqueous yttrium chloride solution with a concentration of 20 mass% in terms of Y₂O₃ was added so that the concentration of Y₂O₃ was 1.65 mol% and an aqueous neodymium chloride solution with a concentration of 20 mass% in terms of Nd₂O₃ was added so that the concentration of Nd₂O₃ was 0.15 mol%, and the resultant was uniformly mixed (step 4).

Then, a 25 mass% aqueous sodium hydroxide solution was added to the obtained mixed solution to neutralize the mixed solution until the pH reached 13 or higher so that a hydroxide precipitate was formed (step 5).

The obtained hydroxide precipitate was collected by filtration and sufficiently washed with water, and the obtained hydroxide was dried at 105°C for 24 hours. The dried hydroxide was thermally treated at 850°C (firing temperature) in the air for 4 hours to obtain an unpulverized zirconia-based powder (stabilized zirconia-based powder) (step 6).

An alumina powder having an average particle diameter of primary particles of 0.1 µm was added to the obtained unpulverized stabilized zirconia-based powder in an amount of 0.25 mass% relative to the stabilized zirconia-based powder, and the resultant was pulverized and mixed for 40 hours with a wet ball mill using water as a dispersion medium. The pulverization was performed using p 5-mm zirconia beads. A zirconia slurry obtained after the pulverization was dried at 110°C to obtain a zirconia powder according to Example 1.

Specifically, the above operation was performed with an apparatus as described with reference to Fig. 1.

### (Example 2 to Example 20 and Comparative Example 1 to Comparative Example 6)

Zirconia powders according to Example 2 to Example 20 and Comparative Example 1 to Comparative Example 6 were obtained in the same manner as in Example 1 except that the amount of the stabilizer added and the amount of alumina added were changed as shown in Table 1.

### [Measurement of specific surface area]

The specific surface area of the zirconia powder of each of Examples and Comparative Examples was measured by BET method using a specific surface area meter ("Macsorb" manufactured by Mountec Co., Ltd.). The results are shown in Table 1.

### [Composition measurement]

The composition (in terms of oxides) of the zirconia powder of each of Examples and Comparative Examples was analyzed using a wavelength-dispersive X-ray fluorescence spectrometer ("ZSX Primus II" manufactured by Rigaku Corporation). The results are shown in Table 1.

### [Measurement of particle diameter D₅₀]

First, 0.15 g of the zirconia powder of each of Examples and Comparative Examples and 40 mL of a 0.2% sodium hexametaphosphate aqueous solution were placed in a 50-mL beaker, the zirconia powder was dispersed by an ultrasonic homogenizer "Sonifier S-450D" (Emerson Japan, Ltd.) for 5 minutes, and then the resultant was placed in a device (laser diffraction-type particle size distribution measuring device ("SALD-2300" manufactured by Shimadzu Corporation)) for measurement. The results are shown in Table 1.

**[Table 1]**

| | Total amount of stabilizer | MₓO_{y} | | MₓO_{y}/Y₂O₃ | Y₂O₃ | Al₂O₃ | Specific surface area | Particle diameter D₅₀ |
|---|---|---|---|---|---|---|---|---|
| | mol% | Type | mol% | mol%/mol% | mol% | wt% | m²/g | µm |
| Example 1 | 1.80 | Nd₂O₃ | 0.15 | 0.09 | 1.65 | 0.25 | 32 | 0.5 |
| Example 2 | 1.80 | Nd₂O₃ | 0.20 | 0.13 | 1.60 | 0.25 | 33 | 0.6 |
| Example 3 | 1.80 | Nd₂O₃ | 0.50 | 0.38 | 1.30 | 0.25 | 37 | 0.5 |
| Example 4 | 1.80 | Nd₂O₃ | 0.60 | 0.50 | 1.20 | 0.25 | 32 | 0.5 |
| Example 5 | 1.80 | Nd₂O₃ | 0.60 | 0.50 | 1.20 | 0 | 32 | 0.5 |
| Example 6 | 1.80 | Nd₂O₃ | 0.60 | 0.50 | 1.20 | 5.0 | 31 | 0.5 |
| Example 7 | 1.80 | Nd₂O₃ | 0.60 | 0.50 | 1.20 | 10 | 30 | 0.4 |
| Example 8 | 1.80 | Nd₂O₃ | 0.90 | 1.00 | 0.90 | 0.25 | 39 | 0.6 |
| Example 9 | 1.80 | Nd₂O₃ | 1.05 | 1.40 | 0.75 | 0.25 | 38 | 0.6 |
| Example 10 | 1.90 | Nd₂O₃ | 0.50 | 0.36 | 1.40 | 0.25 | 37 | 0.5 |
| Example 11 | 2.00 | Nd₂O₃ | 0.70 | 0.54 | 1.30 | 0.25 | 40 | 0.5 |
| Example 12 | 2.40 | Nd₂O₃ | 0.90 | 0.60 | 1.50 | 0.25 | 20 | 0.6 |
| Example 13 | 2.60 | Nd₂O₃ | 1.30 | 1.00 | 1.30 | 0.25 | 22 | 0.7 |
| Example 14 | 2.00 | La₂O₃ | 0.50 | 0.33 | 1.50 | 0.25 | 34 | 0.5 |
| Example 15 | 2.00 | CaO | 0.50 | 0.33 | 1.50 | 0.25 | 37 | 0.6 |
| Example 16 | 1.75 | Tb₂O₃ | 0.25 | 0.17 | 1.50 | 0.25 | 32 | 0.3 |
| Example 17 | 2.00 | Tb₂O₃ | 0.50 | 0.33 | 1.50 | 0.25 | 32 | 0.3 |
| Example 18 | 1.80 | Tb₂O₃ | 0.60 | 0.50 | 1.20 | 0.25 | 32 | 0.4 |
| Example 19 | 1.75 | Dy₂O₃ | 0.25 | 0.17 | 1.50 | 0.25 | 31 | 0.4 |
| Example 20 | 1.80 | Dy₂O₃ | 0.60 | 0.50 | 1.20 | 0.25 | 30 | 0.4 |
| Example 21 | 1.75 | Sm₂O₃ | 0.25 | 0.17 | 1.50 | 0.25 | 37 | 0.7 |
| Example 22 | 1.75 | Gd₂O₃ | 0.25 | 0.17 | 1.50 | 0.25 | 37 | 0.7 |
| Example 23 | 1.75 | Eu₂O₃ | 0.25 | 0.17 | 1.50 | 0.25 | 31 | 0.5 |
| Example 24 | 1.75 | Pr₆O₁₁ | 0.25 | 0.17 | 1.50 | 0.25 | 32 | 0.4 |
| Comparative Example 1 | 1.20 | Nd₂O₃ | 0.40 | 0.50 | 0.80 | 0.25 | 35 | 0.6 |
| Comparative Example 2 | 1.50 | Nd₂O₃ | 0.50 | 0.50 | 1.00 | 0.25 | 35 | 0.7 |
| Comparative Example 3 | 5.25 | Nd₂O₃ | 3.00 | 1.33 | 2.25 | 0.25 | 31 | 0.6 |
| Comparative Example 4 | 2.60 | Nd₂O₃ | 2.50 | 2.00 | 0.10 | 0.25 | 30 | 0.4 |
| Comparative Example 5 | 1.65 | - | - | - | 1.65 | 0.25 | 32 | 0.5 |
| Comparative Example 6 | 2.00 | - | - | - | 2.00 | 0.25 | 11 | 0.4 |

### [Production of zirconia sintered body]

First, molded bodies were obtained from the zirconia powders of Examples and Comparative Examples by cold isostatic pressing (CIP). The molding pressure was set to 2 t/cm².

Then, the molded bodies according to Example 1 to Example 20 and Comparative Examples 1 to 5 were sintered under conditions of 1250°C and 2 hours to obtain zirconia sintered bodies according to Example 1 to Example 20 and Comparative Examples 1 to 5. On the other hand, the molded body according to Comparative Example 6 was sintered under conditions of 1430°C and 2 hours to obtain a zirconia sintered body according to Comparative Example 6.

### <Relative sintered density>

The relative sintered density of the zirconia sintered body of each of Examples and Comparative Examples was determined as follows. The results are shown in Table 2. The expression "water absorption" in Table 2 means that measurement was impossible because water absorption continuously occurred during measurement by Archimedes method due to poor sintering. 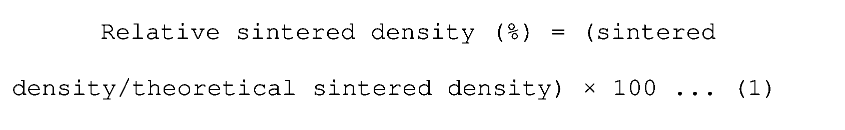 Relative sintered density (%) = (sintered density/theoretical sintered density) × 100

Here, the theoretical sintered density (denoted by ρ₀) is a value calculated by the following formula (2-1): ${ρ}_{0} = 100 / \left[\left(Z/3.987\right)+\left(100-Z\right)/ρz\right]$ wherein ρz is a value calculated by the following formula (2-2) : 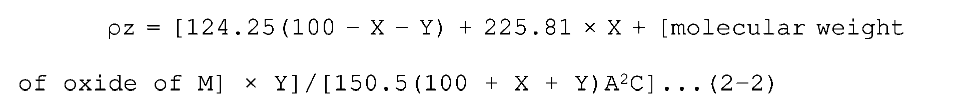 ρz = [124.25(100 - X - Y) + 225.81 × X + [molecular weight of oxide of M] × Y]/[150.5(100 + X + Y)A2C] wherein X, Y, and Z are respectively the concentration (mol%) of yttria, the concentration (mol%) of the oxide of M, and the concentration (wt%) of alumina, and A and C are respectively values calculated by the following formulae (2-3) and (2-4): $A = 0.5080 + 0.06980 \left(X+Y\right) / \left(100+X+Y\right)$ $C = 0.5195 - 0.06180 \left(X+Y\right) / \left(100+X+Y\right)$

In the formula (1), the theoretical sintered density varies depending on the composition of the powder. For example, the theoretical sintered density of yttria-containing zirconia is 6.174 g/cm³ when the yttria content is 1.5 mol% and the Nd oxide content is 0.50 mol%, 6.106 g/cm³ when the yttria content is 1.5 mol% and the Ca oxide content is 0.50 mol% (in the case of Al₂O₃ = 0 wt%) .

The theoretical sintered density (denoted by ρ₁) in the case of containing a colorant is ${ρ}_{1} = 100 / \left[\left(Z/V\right)+\left(100-Z\right)/{ρ}_{0}\right]$ wherein Z is the concentration (wt%) of the colorant and V is the theoretical density (g/cm³) of the colorant.

The theoretical density of the colorant is 5.24 g/cm³ for Fe₂O₃, 5.61 g/cm³ for ZnO, 5.03 g/cm³ for MnO₂, 6.10 g/cm³ for CoO, 5.22 g/cm³ for Cr₂O₃, 4.23 g/cm³ for TiO₂, 7.80 g/cm³ for Tb₄O₇, 6.31 g/cm³ for CuO, and 3.36 g/cm³ for V₂O₅.

The sintered density was measured by Archimedes method.

### <Relative molding density>

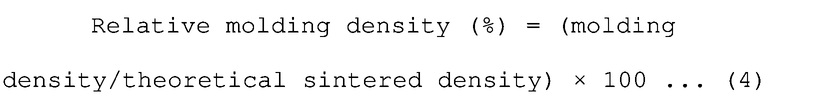

Relative molding density (%) = (molding density/theoretical sintered density) × 100

Here, the theoretical sintered density (denoted by ρ₀) is a value calculated by the above formula (2-1).

### <Crystal grain diameter>

The crystal grain diameter of the zirconia sintered body of each of Examples and Comparative Examples was determined as follows. The results are shown in Table 2. It should be noted that in Comparative Examples 1 and 4, measurement was impossible due to poor sintering.

The SEM observation image of sample of the sintered body obtained by scanning electron microscopy was used to determine an average crystal grain diameter. The sample for SEM observation was prepared in accordance with JIS R 1633. The number of crystal grains per visual field of the SEM observation image was set to 150 or more. A rectangle of any size was drawn in the SEM observation image, and the number of grains present on the sides and diagonal lines of the rectangle was counted. In Examples and Comparative Examples, the magnification was set to 30,000x, and a rectangle of 3.497 µm × 2.375 µm was drawn. The length of each of the sides of the rectangle was set to be equal to or more than 80% of the visual field. The average crystal grain diameter was calculated from the numbers of grains and the lengths of four sides and diagonal lines of the rectangle.

Specifically, the average crystal grain diameter was calculated by the following formula. 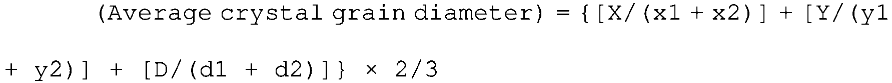 (Average crystal grain diameter) = { [X/ (x1 + x2)] + [Y/(y1 + y2)] + [D/(d1 + d2)]} × 2/3

It should be noted that X, x1, x2, Y, y1, y2, D, d1, and d2 in the formula are as follows.
X (µm): Length of long side of rectangle
Y (µm): Length of short side of rectangle
D (µm): Length of diagonal line of rectangle
x1 (number of grains): Number of grains on one of long sides
x2 (number of grains) : Number of gains on the other long side
y1 (number of grains) : Number of grains on one of short sides
y2 (number of grains) : Number of grains on the other short side
d1 (number of grains) : Number of grains on one of diagonal lines
d2 (number of grains: Number of grains on the other diagonal line

The same operation was performed for three visual fields at each level, and the average of average crystal grain diameters of the three visual fields was defined as a final average crystal grain diameter. The results are shown in Table 2.

It should be noted that prior to the measurement, the sintered body sample was pretreated by mirror polishing and then by thermal etching. The mirror polishing was performed by grinding the surface of the sintered body with a surface grinder and then polishing it with a mirror polishing device while changing the average particle diameter of diamond abrasive grains used in the order of 9 µm, 6 µm, and 3 µm.

### <Thermal degradation resistance>

First, the zirconia sintered body of each of Examples and Comparative Examples was mirror-polished, and its tetragonal fraction (tetragonal fraction before thermal treatment) was determined. The mirror polishing was performed by grinding the surface of the sintered body with a surface grinder and then polishing it with a mirror polishing device while changing the average particle diameter of diamond abrasive grains used in the order of 9 µm, 6 µm, and 3 µm.

Then, the zirconia sintered body was subjected to thermal treatment at 300°C for 1 hour, and then its tetragonal fraction (tetragonal fraction after thermal treatment at 300°C for 1 hour) was determined. Then, a ratio of the tetragonal fraction after thermal treatment at 300°C for 1 hour relative to the tetragonal fraction before thermal treatment (ratio A) was determined as follows. 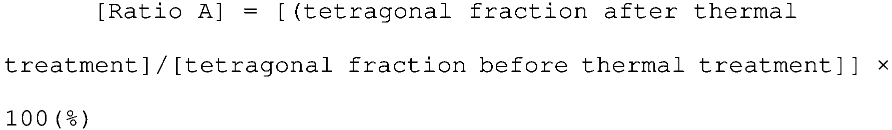 [Ratio A] = [(tetragonal fraction after thermal treatment]/[tetragonal fraction before thermal treatment]] × 100(%)

The results are shown in Table 2. It should be noted that in Comparative Examples 1 and 4, measurement was impossible due to poor sintering.

Each of the tetragonal fractions was determined in the manner described below in [Identification of crystal phases].

### [Identification of crystal phases]

The X-ray diffraction spectrum of each of the zirconia sintered bodies was obtained using an X-ray diffractometer ("RINT2500" manufactured by Rigaku Corporation). The measurement conditions were set as follows.

### <Measurement conditions>

Measuring device: X-ray diffractometer (RINT2500, manufactured by Rigaku Corporation)
Radiation source: CuKα radiation source
Tube voltage: 50 kV
Tube current: 300 mA
Scanning speed: 2θ = 26 to 36°: 4°/min
2θ = 72 to 76°: 1°/min

Then, the crystal phases were identified from the X-ray diffraction spectrum. The phase fractions of the crystal phases contained in the zirconia sintered body were calculated by the following formulae. 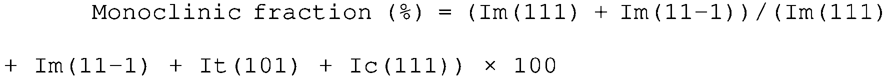 Monoclinic fraction (%) = (Im(111) + Im(11-1))/(Im(111) + Im(11-1) + It(101) + Ic(111)) × 100 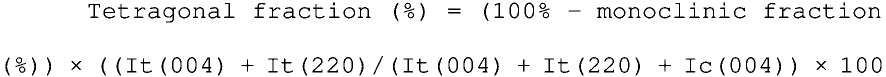 Tetragonal fraction (%) = (100% - monoclinic fraction (%)) × ((It(004) + It(220)/(It(004) + It(220) + Ic(004)) × 100 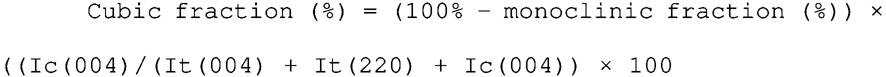 Cubic fraction (%) = (100% - monoclinic fraction (%)) × ((Ic(004)/(It(004) + It(220) + Ic(004)) × 100

Here, Im(111) is the diffraction intensity of (111) in the monoclinic phase, and Im(11-1) is the diffraction intensity of (11-1) in the monoclinic phase.

It(101) is the diffraction intensity of (101) in the tetragonal phase, It (220) is the diffraction intensity of (220) in the tetragonal phase, and It(004) is the diffraction intensity of (004) in the tetragonal phase.

Ic(004) is the diffraction intensity of (004) in the cubic phase and Ic(111) is the diffraction intensity of (111) in the cubic phase.

The monoclinic phase of zirconia was discriminated from the tetragonal phase and the cubic phase in the vicinity of 2θ = 26 to 36° in the XRD spectrum. The tetragonal phase was discriminated from the cubic phase in the vicinity of 2θ = 72 to 76° in the XRD spectrum. The cubic phase may be distorted depending on the amount of the stabilizer added and the type of production method used, which may cause a peak position to shift. However, in the present Examples, a peak between (004) and (220) in the tetragonal phase was calculated as the peak of the cubic phase.

### <Hydrothermal degradation resistance>

First, the zirconia sintered body of each of Examples and Comparative Examples was mirror-polished, and its tetragonal fraction (tetragonal fraction before hydrothermal treatment) was determined. The mirror polishing was performed by grinding the surface of the sintered body with a surface grinder and then polishing it with a mirror polishing device while changing the average particle diameter of diamond abrasive grains used in the order of 9 µm, 6 µm, and 3 µm.

Then, the zirconia sintered body was subjected to hydrothermal treatment at 134°C and 3 atmospheres for 40 hours, and then its tetragonal fraction (tetragonal fraction after hydrothermal treatment at 134°C and 3 atmospheres for 40 hours) was determined. Then, a ratio of the tetragonal fraction after hydrothermal treatment at 134°C and 3 atmosphere for 40 hours relative to the tetragonal fraction before hydrothermal treatment (ratio B) was determined as follows. 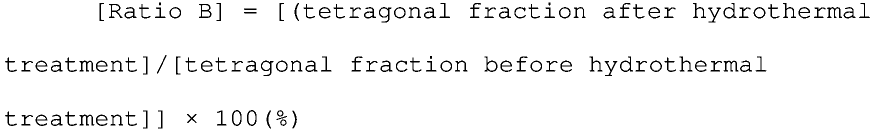 [Ratio B] = [(tetragonal fraction after hydrothermal treatment]/[tetragonal fraction before hydrothermal treatment]] × 100(%)

The results are shown in Table 2. It should be noted that in Comparative Examples 1 and 4, measurement was impossible due to poor sintering.

Each of the tetragonal fractions was determined in the manner described above in [Identification of crystal phases].

### <Toughness>

The measurement of toughness based on IF method was performed by a method in accordance with JIS R 1607 (Testing methods for fracture toughness of fine ceramics at room temperature) using a load of 50 kgf (490.3 N). Five quadrangular indentations formed by a Vickers hardness tester were selected, and the average of toughness values of them was used. The results are shown in Table 2. It should be noted that in Comparative Examples 1 and 4, measurement was impossible due to poor sintering.

The toughness values were calculated by the following formula. $Kc = 0.018 \times Hv \times {a}^{0.5} {\left[\left(c-a\right)/a\right]}^{- 0.5} \times {\left(Hv/E\right)}^{- 0.4}$
Kc, Hv, a, c, and E mean the following. The indentation lengths along the X and Y axes and the crack lengths along the X and Y axes for determining a and c are as shown in Fig. 2.
Kc: Toughness value [MPa·m^{0.5}]
Hv: Vickers hardness [GPa]
a: Half of average of indentation lengths along X and Y axes [µm]
c: Half of average of crack lengths along X and Y axes [µm]
E: Young's modulus [GPa]

The Vickers hardness was determined in accordance with JIS R 1610 (Test methods for hardness of fine ceramics). The Vickers hardness was calculated by the following formula. $Hv = 0.001854 \times \left[F/{d}^{2}Sv\right]$
F and d mean the following. The X-axis indentation length and the Y-axis indentation length for determining d are as shown in Fig. 2.
Hv: Vickers hardness [GPa]
F: Test force [N]
d: Average [mm] of X-axis indentation length and Y-axis indentation length

As the Young's modulus, 210 GPa, which is known as a Young' s modulus of common yttria-stabilized zirconia, was used.

### <Mechanical strength (three-point bending strength)>

The three-point bending strength of the zirconia sintered body of each of Examples and Comparative Examples obtained above was measured in accordance with three-point bending strength specified in JIS R 1601. The results are shown in Table 2. It should be noted that in Comparative Examples 1 and 4, measurement was impossible due to poor sintering.

**[Table 2]**

| | Toughness | [Tetragonal fraction after degradation]/[Tetragonal fraction before degradation] | | Relative sintered density | Three-point bending strength | Sintering temperature | Crystal grain diameter |
|---|---|---|---|---|---|---|---|
| | | Hydrothermal degradation at 134°C | Hydrothermal degradation at 300°C | | | | |
| | MPa·m^{0.5} | % | % | % | kgf/mm² | °C | µm |
| Example 1 | 8 | 89 | 95 | 100 | 126 | 1250 | 0.15 |
| Example 2 | 7 | 91 | 98 | 100 | 129 | 1250 | 0.15 |
| Example 3 | 17 | 90 | 98 | 100 | 110 | 1250 | 0.12 |
| Example 4 | 17 | 90 | 99 | 100 | 119 | 1250 | 0.13 |
| Example 5 | 10 | 84 | 98 | 100 | 119 | 1250 | 0.14 |
| Example 6 | 13 | 92 | 99 | 100 | 128 | 1250 | 0.12 |
| Example 7 | 6 | 90 | 100 | 99.4 | 127 | 1250 | 0.10 |
| Example 8 | 20 | 95 | 99 | 100 | 116 | 1250 | 0.11 |
| Example 9 | 15 | 94 | 99 | 100 | 124 | 1250 | 0.14 |
| Example 10 | 15 | 95 | 99 | 100 | 113 | 1250 | 0.15 |
| Example 11 | 13 | 98 | 99 | 100 | 114 | 1250 | 0.16 |
| Example 12 | 5 | 98 | 100 | 100 | 105 | 1250 | 0.16 |
| Example 13 | 5 | 99 | 100 | 100 | 110 | 1250 | 0.16 |
| Example 14 | 14 | 91 | 71 | 100 | 122 | 1250 | 0.16 |
| Example 15 | 13 | 100 | 99 | 100 | 129 | 1200 | 0.12 |
| Example 16 | 14 | 88 | 96 | 100 | 124 | 1250 | 0.15 |
| Example 17 | 5 | 78 | 100 | 100 | 132 | 1250 | 0.14 |
| Example 18 | 14 | 89 | 97 | 100 | 139 | 1250 | 0.14 |
| Example 19 | 14 | 88 | 96 | 100 | 125 | 1250 | 0.16 |
| Example 20 | 13 | 90 | 99 | 100 | 132 | 1250 | 0.15 |
| Example 21 | 17 | 86 | 78 | 100 | 117 | 1250 | 0.15 |
| Example 22 | 17 | 86 | 72 | 100 | 116 | 1250 | 0.16 |
| Example 23 | 16 | 91 | 92 | 100 | 120 | 1250 | 0.15 |
| Example 24 | 14 | 95 | 97 | 100 | 125 | 1250 | 0.14 |
| Comparative Example 1 | - | - | - | 94 | - | 1250 | - |
| Comparative Example 2 | 18 | 83 | 33 | 100 | 106 | 1250 | 0.12 |
| Comparative Example 3 | 2 | 99 | 98 | 98 | 65 | 1250 | 0.18 |
| Comparative Example 4 | - | - | - | Water absorption | - | 1250 | - |
| Comparative Example 5 | 17 | 84 | 43 | 99 | 124 | 1250 | 0.15 |
| Comparative Example 6 | 12 | 61 | 21 | 100 | 122 | 1430 | 0.26 |

## Claims

1. A zirconia powder comprising
stabilized zirconia containing zirconia and a stabilizer, wherein
the stabilizer contains an oxide of yttrium and an oxide of M,
the M is at least one selected from the group consisting of Ca, Ba, Sr, Dy, Tb, Gd, Eu, Sm, Nd, Pr, and La,
a content of the stabilizer in the stabilized zirconia is 1.7 mol% or more and 2.6 mol% or less in terms of oxide, and
a molar ratio between the oxide of M and the oxide of yttrium [(oxide of M)/(oxide of yttrium)] is 0.05 or more and 1.5 or less.

2. The zirconia powder according to claim 1, wherein the M is at least one selected from the group consisting of Ca, Dy, Tb, Nd, and La.

3. The zirconia powder according to claim 1 or 2, wherein a content of the oxide of M is 0.1 mol% or more and 1.3 mol% or less relative to an entire amount of the stabilized zirconia.

4. The zirconia powder according to any one of claims 1 to 3, which has a specific surface area of 15 m²/g or more and 50 m²/g or less.

5. The zirconia powder according to any one of claims 1 to 4, which has a particle diameter D₅₀ of 0.1 µm or more and less than 1.0 µm.

6. The zirconia powder according to any one of claims 1 to 5, which has the following <Characteristic 1> when molded at a molding pressure of 2 t/cm² by cold isostatic pressing and then heated at 1250°C for 2 hours:
<Characteristic 1>
a ratio of a tetragonal fraction after thermal treatment at 300°C for 1 hour relative to a tetragonal fraction before thermal treatment is 70% or more.

7. The zirconia powder according to any one of claims 1 to 6, which has the following <Characteristic 2> when molded at a molding pressure of 2 t/cm² by cold isostatic pressing and then heated at 1250°C for 2 hours:
<Characteristic 2>
a ratio of a tetragonal fraction after hydrothermal treatment at 134°C and 3 atmospheres for 40 hours relative to a tetragonal fraction before hydrothermal treatment is 70% or more.

8. The zirconia powder according to any one of claims 1 to 7, which has the following <Characteristic 3> when molded at a molding pressure of 2 t/cm² by cold isostatic pressing and then heated at 1250°C for 2 hours:
<Characteristic 3>
a toughness value as measured by IF method is 5 MPa·m^{0.5} or more.

9. The zirconia powder according to any one of claims 1 to 8, which has the following <Characteristic 4> when molded at a molding pressure of 2 t/cm² by cold isostatic pressing and then heated at 1250°C for 2 hours:
<Characteristic 4>
a three-point bending strength is 80 kgf/mm² or more and 150 kgf/mm² or less.

10. The zirconia powder according to any one of claims 1 to 9, being a powder for obtaining a zirconia sintered body having a crystal grain diameter of 0.2 µm or less.

11. The zirconia powder according to claim 10, being a powder for being molded into a molded body from which the zirconia sintered body is obtained via sintering under conditions of 1200°C or higher and 1350°C or lower and 1 hour or more and 5 hours or less.

12. The zirconia powder according to any one of claims 1 to 11, wherein the content of the stabilizer in the stabilized zirconia is 1.7 mol% or more and 2.5 mol% or less in terms of oxide.
